# EUROPEAN PATENT APPLICATION

(11) **EP 4 583 574 A1**
(43) Date of publication of application: **09.07.2025**
(21) Application number: 23867253.9
(22) Date of filing: 31.08.2023
(51) Int. Cl.: H04W 36/00

(54) **MEASUREMENT METHOD, AND TERMINAL DEVICE AND NETWORK DEVICE**

(30) Priority: 21.09.2022 CN 202211153576; 29.10.2022 CN 202211340010
(71) Applicant: Huawei Technologies Co., Ltd., Shenzhen, Guangdong 518129 (CN)
(72) Inventor: KUANG, Yiru, Shenzhen, Guangdong 518129 (CN); XUE, Yifan, Shenzhen, Guangdong 518129 (CN); XUE, Lixia, Shenzhen, Guangdong 518129 (CN)
(74) Representative: Maiwald GmbH
(86) International application number: PCT/CN2023/116308
(87) International publication number: WO 2024/060962

(57) **Abstract**

This application provides a measurement method, applied to a terminal device. The method includes: When the terminal device receives a wake up signal over a wake up radio WUR link and a first condition is met, the terminal device measures a serving cell and a neighboring cell over a new radio NR main link, to obtain first measurement results of the NR main link in the serving cell and the neighboring cell; and determines, based on the first measurement results and a cell reselection condition, whether to perform cell reselection. The first condition includes that a result of measuring the serving cell by the terminal device on the NR main link or the WUR link is less than a first value. In this application, cell reselection can be performed in a timely manner with low power consumption, to achieve a balance between low power consumption and timely cell reselection.

## Description

This application claims priority to Chinese Patent Application No. 202211153576.2, filed with the China National Intellectual Property Administration on September 21, 2022 and entitled "MEASUREMENT METHOD BY USING WUR LINK, TERMINAL DEVICE, NETWORK DEVICE, AND APPARATUS", which is incorporated herein by reference in its entirety.

This application claims priority to Chinese Patent Application No. 202211340010.0, filed with the China National Intellectual Property Administration on October 29, 2022 and entitled "MEASUREMENT METHOD, TERMINAL DEVICE, AND NETWORK DEVICE", which is incorporated herein by reference in its entirety.

### TECHNICAL FIELD

This application relates to the communication field, and in particular, to a measurement method, a terminal device, and a network device.

### BACKGROUND

In a new radio (New Radio, NR) system, a terminal device (User Equipment, UE) performs radio resource management (Radio Resource Management, RRM) measurement on a serving cell (serving cell) and a neighboring cell (neighbor cell) in a state such as an idle state or an inactive state. The serving cell is a cell on which the UE currently camps. According to the specification of the 3GPP standard, the UE performs RRM measurement at least once at a time interval of T. The UE needs to perform RRM measurement on the serving cell. In addition, the UE may perform RRM measurement on the neighboring cell according to an S criterion configured by a network device (for example, a base station). Based on measurement results, the UE decides to stay in the serving cell or perform cell reselection (to the neighboring cell), so that the UE camps on a cell with better channel quality.

To reduce power consumption, the UE usually includes a NR circuit (which may also be referred to as a main circuit) and a wake up (Wake Up Receiver/Radio, WUR) circuit. The NR circuit may also be referred to as a main receiver, and the WUR circuit may also be referred to as a wake up receiver. The main circuit corresponds to a NR main link. The WUR circuit corresponds to a WUR link. When the UE is connected to the network device over the NR main link (which may also be referred to as a NR link or a main link), the main circuit works, and in this case, the UE has high power consumption. When the UE is connected to the network device over the WUR link, the WUR circuit works, and the main circuit does not work when no wake up signal is received. In this case, the UE has low power consumption. After the wake up signal is received, the WUR circuit enables, by using an internal signal, the main circuit to work. Therefore, on a premise that a working requirement of the UE is met, the WUR circuit of the UE is enabled to work to the greatest extent, and the main circuit does not work, so that power consumption of the UE can be reduced.

### SUMMARY

After in-depth research and analysis, it is founded that currently, only cell reselection in a NR system is considered, and how to perform cell reselection by UE in a state such as an idle (idle) state or an inactive (inactive) state in the NR system supporting a WUR link has not discussed. In view of this, for the case in which the NR system supports the WUR link, this application provides a measurement method, a terminal device, and a network device, for the UE in the state such as the idle state or the inactive state to be connected to a network device over the WUR link, and to perform cell reselection in a timely manner with low power consumption, thereby achieving a balance between low power consumption and timely cell reselection. In addition, this application is further compatible with a previous cell reselection mechanism.

According to a first aspect, a measurement method is provided. The method is applied to a terminal device. The method includes the following steps.

When the terminal device receives a wake up signal over a WUR link and a first condition is met, the terminal device measures a serving cell and a neighboring cell by using a NR main link, to obtain first measurement results of the NR main link in the serving cell and the neighboring cell; and
determines, based on the first measurement results and a cell reselection condition, whether to perform cell reselection, where
the first condition includes that a result of measuring the serving cell by the terminal device on the NR main link or the WUR link is less than a first value.

That the terminal device measures a serving cell and a neighboring cell by using a NR main link includes: The terminal device measures the serving cell over the NR main link, and the terminal device measures the neighboring cell over the NR main link.

According to the first aspect, the two conditions that the terminal device receives the wake up signal over the WUR link and the first condition is met makes the terminal device neither perform cell reselection excessively early nor perform cell reselection excessively late, so that the terminal device achieves a balance between low power consumption and timely cell reselection. In addition, the first aspect is compatible with the previous cell reselection mechanism rather than exclude the previous cell reselection mechanism.

According to a first aspect, that the terminal device measures a serving cell and a neighboring cell over a NR main link includes:
a link on which the terminal device works is switched between the NR main link and the WUR link; and
when the terminal device works on the NR main link, the terminal device measures the serving cell and the neighboring cell by using a reference signal of the NR main link.

According to any one of the first aspect and the implementations of the first aspect, in the case that the first condition includes that the result of measuring the serving cell by the terminal device on the NR main link is less than the first value, the first condition further includes that the result of measuring the serving cell by the terminal device on the WUR link is less than a first threshold.

According to any one of the first aspect and the implementations of the first aspect, the method includes: When the result of measuring the serving cell on the NR main link is greater than or equal to the first value, and the result of measuring the serving cell on the WUR link is less than the first threshold, the link on which the terminal device works is switched between the NR main link and the WUR link; and
when the terminal device works on the NR main link, the terminal device measures the serving cell by using the reference signal of the NR main link, to obtain the measurement result of the NR main link in the serving cell.

According to any one of the first aspect and the implementations of the first aspect, the method includes:
When the measurement result of the WUR link in the serving cell is greater than or equal to the first threshold, the terminal device works only on the WUR link, and measures the serving cell by using a reference signal of the WUR link, to obtain the measurement result of the WUR link in the serving cell.

According to any one of the first aspect and the implementations of the first aspect, the first value is a NR S criterion threshold.

According to any one of the first aspect and the implementations of the first aspect, in the case that the first condition includes that the result of measuring the serving cell by the terminal device on the WUR link is less than the first value, the method includes:
When the measurement result of the WUR link in the serving cell is greater than or equal to the first value, the terminal device works only on the WUR link, and measures the serving cell by using a reference signal of the WUR link, to obtain the measurement result of the WUR link in the serving cell.

According to any one of the first aspect and the implementations of the first aspect, the first value is a first threshold.

According to any one of the first aspect and the implementations of the first aspect, in the case that the first condition includes that the result of measuring the serving cell by the terminal device on the NR main link is less than the first value, the method includes:
When the result of measuring the serving cell by the terminal device on the NR main link is greater than or equal to the first value, the link on which the terminal device works is switched between the NR main link and the WUR link;
when the terminal device works on the NR main link, the terminal device measures a neighboring cell with a first priority and the serving cell by using the reference signal of the NR main link, to obtain second measurement results of the NR main link in the neighboring cell with the first priority and the serving cell, where the first priority is higher than a priority of a frequency of the serving cell of the terminal device; and
determines, based on the second measurement results and the cell reselection condition, whether to perform cell reselection.

According to any one of the first aspect and the implementations of the first aspect, in the case that the first condition includes that the result of measuring the serving cell by the terminal device on the WUR link is less than the first value, the method includes:
When the result of measuring the serving cell by the terminal device on the WUR link is greater than or equal to the first value, the link on which the terminal device works is switched between the NR main link and the WUR link;
when the terminal device works on the NR main link, the terminal device measures a neighboring cell with a first priority and the serving cell by using the reference signal of the NR main link, to obtain second measurement results of the NR main link in the neighboring cell with the first priority and the serving cell, where the first priority is higher than a priority of a frequency of the serving cell of the terminal device; and
determines, based on the second measurement results and the cell reselection condition, whether to perform cell reselection.

According to any one of the first aspect and the implementations of the first aspect, the method includes:
When the result of measuring the serving cell by the terminal device on the NR main link is greater than or equal to the first value, and the measurement result of the WUR link in the serving cell is less than a first threshold, the link on which the terminal device works is switched between the NR main link and the WUR link;
when the terminal device works on the NR main link, the terminal device measures the neighboring cell with the first priority and the serving cell by using the reference signal of the NR main link, to obtain the second measurement results of the NR main link in the neighboring cell with the first priority and the serving cell, where the first priority is higher than the priority of the frequency of the serving cell of the terminal device; and
determines, based on the second measurement results and the cell reselection condition, whether to perform cell reselection.

According to any one of the first aspect and the implementations of the first aspect, that a link on which the terminal device works is switched between the NR main link and the WUR link further includes:
When the terminal device works on the WUR link, the terminal device measures the serving cell by using a reference signal of the WUR link, to obtain the measurement result of the WUR link in the serving cell.

According to any one of the first aspect and the implementations of the first aspect, the method includes:
When the measurement result of the WUR link in the serving cell is greater than or equal to the first threshold, the terminal device works only on the WUR link, and measures the serving cell by using a reference signal of the WUR link, to obtain the measurement result of the WUR link in the serving cell.

According to any one of the first aspect and the implementations of the first aspect, the first value is a NR S criterion threshold.

According to any one of the first aspect and the implementations of the first aspect, the first value is a first threshold.

According to any one of the first aspect and the implementations of the first aspect, the neighboring cell with the first priority corresponds to a frequency with the first priority; and
the priority of the frequency of the serving cell and the first priority are included in a first priority configuration, and the first priority configuration is a priority configuration used when the terminal device receives the WUR signal over the WUR link.

According to any one of the first aspect and the implementations of the first aspect, determining, based on the first measurement results and a cell reselection condition, whether to perform cell reselection includes:
performing cell reselection when first current measurement results meet the cell reselection condition.

According to any one of the first aspect and the implementations of the first aspect, determining, based on the first measurement results and a cell reselection condition, whether to perform cell reselection includes:
skipping performing cell reselection when the first current measurement results do not meet the cell reselection condition.

According to any one of the first aspect and the implementations of the first aspect, determining, based on the second measurement results and the cell reselection condition, whether to perform cell reselection includes:
performing cell reselection when second current measurement results meet the cell reselection condition.

According to any one of the first aspect and the implementations of the first aspect, determining, based on the second measurement results and the cell reselection condition, whether to perform cell reselection includes:
skipping performing cell reselection when second current measurement results do not meet the cell reselection condition.

According to any one of the first aspect and the implementations of the first aspect, the performing cell reselection includes:
selecting a first neighboring cell as an updated serving cell, where the first neighboring cell is one of neighboring cells.

According to any one of the first aspect and the implementations of the first aspect, the terminal device measures the serving cell over the NR main link, and uses a first relaxed measurement requirement.

According to any one of the first aspect and the implementations of the first aspect, the terminal device measures the neighboring cell over the NR main link, and uses a second relaxed measurement requirement.

According to any one of the first aspect and the implementations of the first aspect, the terminal device measures the neighboring cell with the first priority over the NR main link, and uses a second relaxed measurement requirement.

According to any one of the first aspect and the implementations of the first aspect, when the first condition is not met and the terminal device works on the NR main link, the terminal device measures the serving cell by using the reference signal of the NR main link, and uses a third relaxed measurement requirement.

According to any one of the first aspect and the implementations of the first aspect, when the first condition is not met and the terminal device works on the NR main link, the terminal device measures the neighboring cell by using the reference signal of the NR main link, and uses a fourth relaxed measurement requirement.

According to any one of the first aspect and the implementations of the first aspect, when the terminal device is in a low-speed state, the terminal device measures the serving cell by using the reference signal of the NR main link, and uses the first relaxed measurement requirement.

According to any one of the first aspect and the implementations of the first aspect, when the terminal device is in a low-speed state, the terminal device measures the neighboring cell by using the reference signal of the NR main link, and uses the second relaxed measurement requirement.

According to any one of the first aspect and the implementations of the first aspect, when the terminal device is in a low-speed state, the terminal device measures the neighboring cell with the first priority by using the reference signal of the NR main link, and uses the second relaxed measurement requirement.

According to any one of the first aspect and the implementations of the first aspect, when the terminal device is in a low-speed state, the first condition is not met, and the terminal device works on the NR main link, the terminal device measures the serving cell by using the reference signal of the NR main link, and uses the third relaxed measurement requirement.

According to any one of the first aspect and the implementations of the first aspect, when the terminal device is in a low-speed state, the first condition is not met, and the terminal device works on the NR main link, the terminal device measures the neighboring cell by using the reference signal of the NR main link, and uses the fourth relaxed measurement requirement.

According to any one of the first aspect and the implementations of the first aspect, the first priority configuration is received from the network device.

According to any one of the first aspect and the implementations of the first aspect, the first value is received from the network device.

According to any one of the first aspect and the implementations of the first aspect, the first threshold is received from the network device.

According to any one of the first aspect and the implementations of the first aspect, the serving cell is a cell on which the terminal device currently camps.

According to a second aspect, a terminal device is provided. The terminal device includes a processor and a memory. The memory stores a computer program. When the computer program is run by the processor, the terminal device is enabled to perform the method according to any one of the first aspect and the implementations of the first aspect.

According to a third aspect, a computer-readable storage medium is provided. The computer-readable storage medium stores a computer program. When the computer program is run on a terminal device, the terminal device is enabled to perform the method according to any one of the first aspect and the implementations of the first aspect.

According to a fourth aspect, a computer program product is provided. The computer program product is stored in a computer-readable storage medium. When the computer program product is run on a terminal device, the terminal device is enabled to perform the method according to any one of the first aspect and the implementations of the first aspect.

According to a fifth aspect, a chip is provided. The chip includes a processor and a memory coupled to the processor. The memory stores a computer program. The chip is located in a terminal device. When the processor executes the computer program, the terminal device is enabled to perform the method according to any one of the first aspect and the implementations of the first aspect.

According to a sixth aspect, a communication system is provided. The communication system includes a terminal device and a network device, and the terminal device is configured to perform the method according to any one of the first aspect and the implementations of the first aspect.

For technical effects corresponding to any one of the second aspect and the implementations of the second aspect, technical effects corresponding to any one of the third aspect and the implementations of the third aspect, technical effects corresponding to any one of the fourth aspect and the implementations of the fourth aspect, technical effects corresponding to any one of the fifth aspect and the implementations of the fifth aspect, and technical effects corresponding to any one of the sixth aspect and the implementations of the sixth aspect, refer to the technical effects corresponding to the first aspect and the implementations of the first aspect, details are not described herein again.

### BRIEF DESCRIPTION OF DRAWINGS

The foregoing and other features, advantages, and aspects of embodiments of this application become clearer with reference to the accompanying drawings and the following detailed descriptions. In the accompanying drawings, same or similar reference numerals indicate same or similar elements.
FIG. 1 is a diagram of a communication connection between a network device and a terminal device;
FIG. 2 is a diagram of a principle of Embodiment 1 of a WUR measurement method according to an embodiment of this application;
FIG. 3 is a diagram of another principle of Embodiment 1 of a WUR measurement method according to an embodiment of this application;
FIG. 4 is a diagram of a principle of Embodiment 2 of a WUR measurement method according to an embodiment of this application;
FIG. 5 is a diagram of another principle of Embodiment 2 of a WUR measurement method according to an embodiment of this application; and
FIG. 6 is a diagram of a structural composition of a terminal device according to an embodiment of this application.

### DESCRIPTION OF EMBODIMENTS

The following describes embodiments of this application with more details with reference to the accompanying drawings. Although some embodiments of this application are shown in the accompanying drawings, it should be understood that this application may be implemented in various forms and should not be construed as any limitation on embodiments described herein, and instead, these embodiments are provided for a more thorough and complete understanding of this application. It should be understood that, the accompanying drawings and embodiments of this application are merely used as examples, but are not intended to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of this application may be implemented according to any proper communication protocol, including but not limited to a cellular communication protocol such as a fifth generation (5G) or a sixth generation (6G) cellular communication protocol, a wireless local area network communication protocol such as the Institute of Electrical and Electronics Engineers (Institute of Electrical and Electronics Engineers, IEEE) 802.11, and/or any other protocol currently known or developed in the future.

The technical solutions in embodiments of this application are applied to a communication system that complies with any appropriate communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access 2000, CDMA 2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a fifth generation system or a new radio (New Radio, NR) system, or a future evolved sixth generation communication system.

Before embodiments of this application are specifically described, some terms in this application are first explained.

A terminal device is any terminal device that can perform wired or wireless communication with a network device or another terminal device. The terminal device may be sometimes referred to as user equipment (User Equipment, UE). The terminal device may be any type of mobile terminal, fixed terminal, or portable terminal. For example, the terminal device may include a mobile phone, a station, a unit, a device, a mobile terminal (Mobile Terminal, MT), customer premises equipment (Customer Premises Equipment, CPE), a subscription station, a portable subscription station, an Internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an Internet of Things (Internet of Things, IoT) device, an in-vehicle device, a flight device, a virtual reality (Virtual Reality, VR) device, an augmented reality (Augmented Reality, AR) device, a wearable device, a terminal device in a 5G network or any terminal device in an evolved public land mobile network (Public Land Mobile Network, PLMN), another device that can be used for communication, or any combination thereof. This is not limited in embodiments of this application.

A network device is an entity or a node that may be configured to communicate with a terminal device, for example, may be an access network device. The access network device may be an apparatus that is deployed in a radio access network and that provides a wireless communication function for a mobile terminal. For example, the access network device may be a radio access network (Radio Access Network, RAN) network device. The access network device may include various types of base stations. For example, the access network device may include various forms of macro base stations, micro base stations, picocell base stations, femto base stations, relay stations, access points, remote radio units (Remote Radio Units, RRUs), radio heads (Radio Heads, RHs), and remote radio heads (Remote Radio Heads, RRHs). In systems using different radio access technologies, names of access network devices may be different. For example, in a 5G network, the access network device may be referred to as a gNodeB (gNB) or a NR NodeB (NR NB). In some scenarios, the access network device may include a central unit (Central Unit, CU) and/or a distributed unit (Distributed Unit, DU). The CU and DU may be placed in different places. For example, the DU is remotely placed in a high-traffic area, and the CU is placed in a central equipment room. Alternatively, the CU and the DU may be placed in a same equipment room. The CU and the DU may alternatively be different components in a same rack. For ease of description, in subsequent embodiments of this application, the foregoing apparatuses that provide a wireless communication function for a terminal device are collectively referred to as a network device. This is not specifically limited in embodiments of this application.

In a NR system, the UE performs RRM measurement on a serving cell and/or a neighboring cell in a state such as an idle state or an inactive state. For example, the UE periodically performs RRM measurement on the serving cell and/or the neighboring cell based on a specific measurement gap. The serving cell is a cell on which the UE currently camps. The UE may perform RRM measurement on the neighboring cell according to an S criterion configured by the network device (for example, a base station). A manner of performing neighboring cell measurement according to the S criterion is as follows: The UE needs to measure a to-be-measured frequency whose priority is higher than that of a frequency (frequency) of the serving cell. For a to-be-measured frequency whose priority is equal to or lower than that of the frequency of the serving cell, if a current measurement result of the serving cell is higher than a threshold corresponding to the S criterion (which may be referred to as a NR S criterion threshold below), the UE does not need to measure the to-be-measured frequency; or if the current measurement result of the serving cell is not higher than the threshold corresponding to the S criterion, the UE needs to measure the to-be-measured frequency. The threshold corresponding to the S criterion may be indicated by the network device by using a NR main link, for example, indicated by using a system information block (system information block, SIB) 2. For details, refer to 3GPP TS 38.304 V15.8.0 (for example, 5.2.4.2 in 3GPP TS 38.304 V15.8.0). The threshold corresponding to the S criterion may be SIntraSearchP (or s-IntraSearchP) and/or SIntraSearchQ (or s-IntraSearchQ). In terms of measurement manners, RRM measurement on the neighboring cell may be divided into intra-frequency (intra-frequency) measurement, inter-frequency (inter-frequency) measurement, and inter-RAT (inter-RAT) measurement.

Based on current measurement results, the UE decides to stay in the serving cell or perform cell reselection (to the neighboring cell), so that the UE camps on a cell with better channel quality. For example, in a time period, when the current measurement result of the neighboring cell is higher than the current measurement result of the serving cell, and is higher by a specific threshold, the UE may reselect the neighboring cell.

It should be noted that, the "current measurement result" in this application may also be expressed as a "measurement result". The meanings of the two are the same.

In the NR system, in the state such as the idle state or the inactive state, UE may obtain a paging frame (Paging Frame, PF) through calculation based on a UE ID of the UE, to obtain a location of a paging occasion (Paging Occasion, PO) in the PF, and receive paging in the PO over the NR main link (correspondingly, by invoking a main circuit). In addition, in a connected state, the UE also receives data over the NR main link. The UE may also receive a paging-related message over a WUR link (correspondingly, by invoking a WUR circuit).

Optionally, the UE may first search for a signal of the NR main link during power-on, and if the signal of the NR main link is found, the UE may camp on a cell over the NR main link. The UE may receive, over the NR main link, configuration information indicating the WUR link. In this case, the UE may further search for a signal of the WUR link based on the configuration information of the WUR link. If the signal of the WUR link is found and signal quality of the WUR link is good, the UE may enter the WUR link to work. Alternatively, if the UE cannot find the signal of the NR main link during power-on, the UE may search for the signal of the WUR link based on the configuration information preset in the UE. If the signal of the WUR link is found and signal quality of the WUR link is good, the UE may enter the WUR link to work.

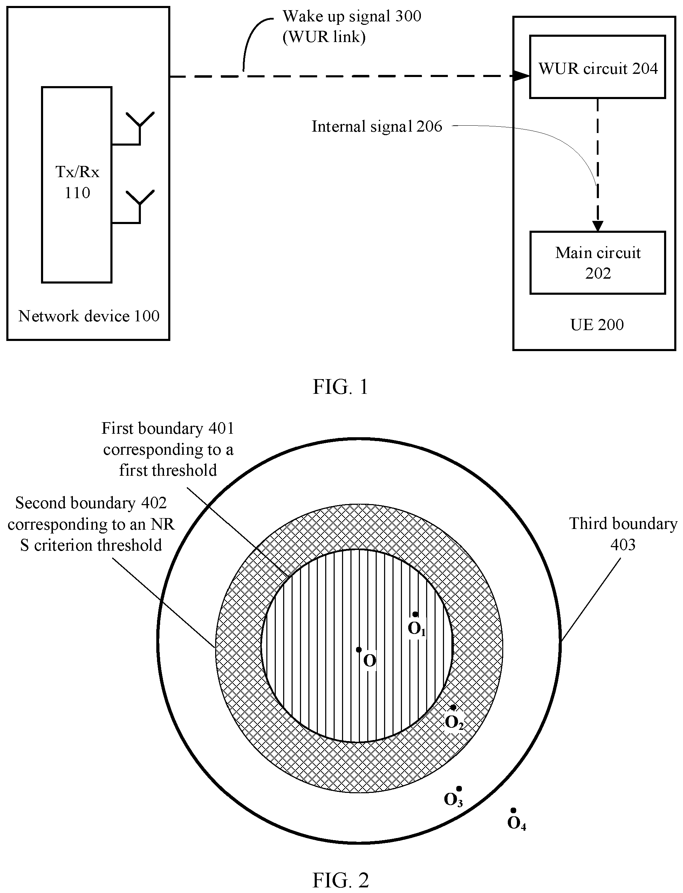

For example, FIG. 1 is a diagram of a communication connection between a network device and a terminal device. As shown in FIG. 1, the network device 100 includes a wireless transceiver TX/RX 110, and the UE 200 includes a main circuit 202 and a WUR circuit 204. When the UE 200 is connected to the network device 100 through a NR main link (not shown in the figure), (this may also be referred to as that the UE works on the NR main link), the main circuit 202 works, and in this case, power consumption of the UE 200 is high. When the UE 200 is connected to the network device through a WUR link, (this may also be referred to as that the UE works on the WUR link), the WUR circuit 204 works. When the WUR circuit 204 does not receive a wake up signal 300 transmitted through the WUR link, the main circuit 202 does not work, and therefore, power consumption of the UE is low. After the WUR circuit 204 receives the wake up signal 300 transmitted over the WUR link, the WUR circuit 204 enables, by using an internal signal 206, the main circuit 202 to work, so that the UE 200 can switch to the NR main link in a timely manner to work. It can be learned that, on the premise that a working requirement of the UE 200 is met, the WUR circuit 204 of the UE 200 is enabled to work to the greatest extent, and the main circuit 202 does not work, so that power consumption of the UE 200 can be reduced.

For the terminal device shown in FIG. 1, regardless of whether the terminal device receives paging in the idle (idle) state/inactive (inactive) state or receives data in the connected state, a main receiver (or referred to as the main circuit) in the terminal device may be used to complete these functions. In this application, that the terminal device receives a signal by using the main circuit is also referred to as working on the main link, or is also referred to as that the main circuit is in a working state. It may be understood that the main circuit (or the main receiver) is merely a name for differentiation, and a specific name does not limit the protection scope of this application. For ease of descriptions, the main circuit is uniformly used for descriptions below.

Receiving a signal by the terminal device by using the main circuit may be referred to as transmission on the main link. The main link represents a connection relationship between the terminal device and the network device, and is a logical concept rather than a physical entity. It may be understood that the main link is merely a name for differentiation, and a specific name does not limit the protection scope of this application.

In addition, to reduce power consumption of the terminal device, the terminal device may further receive a signal by using a separate low power small circuit. The low power small circuit may be implemented by using a separate small circuit or a chip with a simple structure, with low power consumption. The low power small circuit may be referred to as a wake up radio (wake up radio, WUR) circuit, may be referred to as a wake up circuit, may be referred to as a low power circuit, may be referred to as a wake up receiver (wake up receiver, WUR) module, or the like. The name of the low power small circuit is not limited in this application. In this application, for ease of descriptions, the low power small circuit is referred to as a wake up circuit. It may be understood that the wake up circuit is merely a name for differentiation, and a specific name does not limit the protection scope of this application. For ease of descriptions, the wake up circuit is uniformly used for descriptions below.

The wake up circuit is configured to: receive a wake up signal (wake up signal, WUS, also referred to as a low power wake up signal (low power wake up signal, LP-WUS)) sent by the network device, and demodulate wake up indication information based on an information bit carried in the WUS, to wake up the main circuit that is turned off (or in a sleep state) in the terminal device. In this application, that the terminal device receives the wake up signal by using the WUR circuit is referred to as that the UE works on the WUR link, or that the WUR circuit is in a working state. That the UE works on the WUR link includes that the UE works on the WUR link on the whole (refer to the following explanations), and that the UE works only on the WUR link.

The wake up signal may be used to wake up at least one terminal device or at least one group of terminal devices. In an example, the wake up signal includes wake up information, and the wake up information indicates information related to waking up the terminal device. For example, the wake up information is paging-related information. The wake up information may be used by the terminal device to determine whether to perform a paging receiving procedure, or the wake up information may be used by the terminal device to determine whether to initiate random access. In an example, the wake up information includes information (for example, a UE ID) about one or more terminal devices that need to be woken up. The one or more terminal devices may also be in a form of a terminal device group (UE group). Correspondingly, the wake up information may include a group identifier of the terminal device group.

Specifically, when the network device sends the WUS to the terminal device, currently, to reduce power consumption of the WUR circuit, some simple modulation methods such as on off keying (on off keying, OOK) or Manchester OOK are usually used for the WUS signal. Correspondingly, the WUR circuit in the terminal device receives the WUS in an envelope detection manner.

After in-depth research and analysis, it is founded that currently, only cell reselection in the NR system is considered, and how to perform measurement and cell reselection by UE in the state such as the idle state or the inactive state when the NR system supports the WUR link is not discussed. In view of this, for the case in which the NR system supports the WUR link, this application provides a measurement method, a terminal device, and a network device, so that the UE in the state such as the idle state or the inactive state is connected to the network device over the WUR link, and can perform cell reselection in a timely manner with low power consumption, thereby achieving a balance between low power consumption and timely cell reselection. In addition, this application is further compatible with a previous measurement and cell reselection mechanism.

To be compatible with the previous measurement and cell reselection mechanism, a premise is set in this application: The WUR link carries only a function of measuring the serving cell, and does not carry a function of measuring the neighboring cell. The NR main link carries the function of measuring the neighboring cell. On this premise, the technical problem to be resolved by this application is discussed more specifically.

Currently, in the NR system, after being powered on, the UE first works on the NR link. If the UE has a WUR capability and the NR system also supports WUR, after the UE finds a WUR signal (in this case, the UE also finds a NR signal), the UE switches to the WUR link for energy saving. The UE switches to the NR main link only after the UE finds only the NR signal but cannot find the WUR signal. In this way, the UE measures the serving cell and the neighboring cell on the NR main link. In this case, the UE is usually located at an edge of the serving cell. In this case, if neighboring cell measurement is enabled, cell reselection cannot be performed in a timely manner. That the UE finds the WUR signal may be understood as that power of the WUR signal found by the UE is greater than a specific threshold, or may be understood as that the UE is currently in coverage of the WUR link.

However, to ensure timely cell reselection, if the UE switches from the WUR link to the NR main link in advance, duration in which the UE works on the WUR link is shortened. Consequently, power consumption of the UE is increased, which is disadvantageous to power consumption control of the UE.

Therefore, how to maintain a balance between timely cell reselection and reduction of power consumption of the UE, and reduce power consumption of the UE when ensuring timely cell reselection becomes a technical problem to be resolved. Further, how to further be compatible with the previous measurement and cell reselection mechanism on the basis of resolving the foregoing technical problem also becomes a technical problem to be resolved.

Based on the foregoing premise, to resolve the foregoing technical problems, the applicant proposes a measurement method, a terminal device, and a network device. Embodiments of this application may be divided into Embodiment 1 and Embodiment 2 based on whether a frequency with a higher priority is introduced when the UE works on the WUR link. A case in which the frequency with the higher priority is not introduced when the UE works on the WUR link corresponds to Embodiment 1, and a case in which the frequency with the higher priority is introduced when the UE works on the WUR link corresponds to Embodiment 2. That the frequency with the higher priority is introduced means follows: When the UE works on the WUR link, the WUR link corresponds to a serving cell; and considering that a priority of a frequency of the serving cell may not be a highest priority, and a frequency of a neighboring cell may be a frequency with a higher priority, special processing is considered for measurement of the frequency with the higher priority. That the frequency with the higher priority is not introduced means follows: When the UE works on the WUR link, the WUR link corresponds to a serving cell, a priority of a frequency of the serving cell may not be a highest priority, but a frequency of a neighboring cell is not a frequency with a higher priority; or, the priority of the frequency of the serving cell is the highest priority, and the frequency of the neighboring cell is not a frequency with a higher priority; or, regardless of the serving cell or the neighboring cell, there is no concept of a priority, and naturally, there is no case in which the frequency with the higher priority is introduced; or, even if the frequency of the neighboring cell may be a frequency with a higher priority, no special processing is performed on measurement of the frequency with the higher priority, that is, same processing is performed on the measurement of the frequency with the higher priority and a frequency with a same or lower priority.

It should be noted that one frequency has one priority, and whether the frequency is a frequency on which the WUR link is deployed (or supported) or a frequency on which the NR main link is deployed (or supported) is not distinguished. To be specific, for a frequency, only the WUR link may be deployed (or supported), only the NR main link may be deployed (or supported), or both the WUR link and the NR main link may be deployed (or supported) on the frequency.

Before the technical solutions of this application are specifically described, a current measurement result of the WUR link and a current measurement result of the NR link in this application are first described.

When the UE works on the WUR link, the UE may perform measurement by using a reference signal (which may also be referred to as a first reference signal) of the WUR link, to obtain the current measurement result of the WUR link. For example, in this case, the current measurement result of the WUR link includes: a WUR reference signal based reference signal received power (Reference Signal Received Power, RSRP) value, which is referred to as a WUR-RSRP value for short below; and/or a WUR reference signal based reference signal received quality (Reference Signal Received Quality, RSRQ) value, which is referred to as a WUR-RSRQ value for short below.

When the UE works on the NR main link, the UE may perform measurement by using a reference signal (which may also be referred to as a second reference signal) of the NR main link, to obtain the current measurement result of the NR main link. For example, in this case, the current measurement result of the NR main link includes: a NR reference signal based reference signal received power RSRP value, which is referred to as a NR-RSRP value for short below; and/or a NR reference signal based reference signal received quality RSRQ value, which is referred to as a NR-RSRQ value for short below.

The following describes the technical solutions of this application in detail with reference to the accompanying drawings.

### Embodiment 1

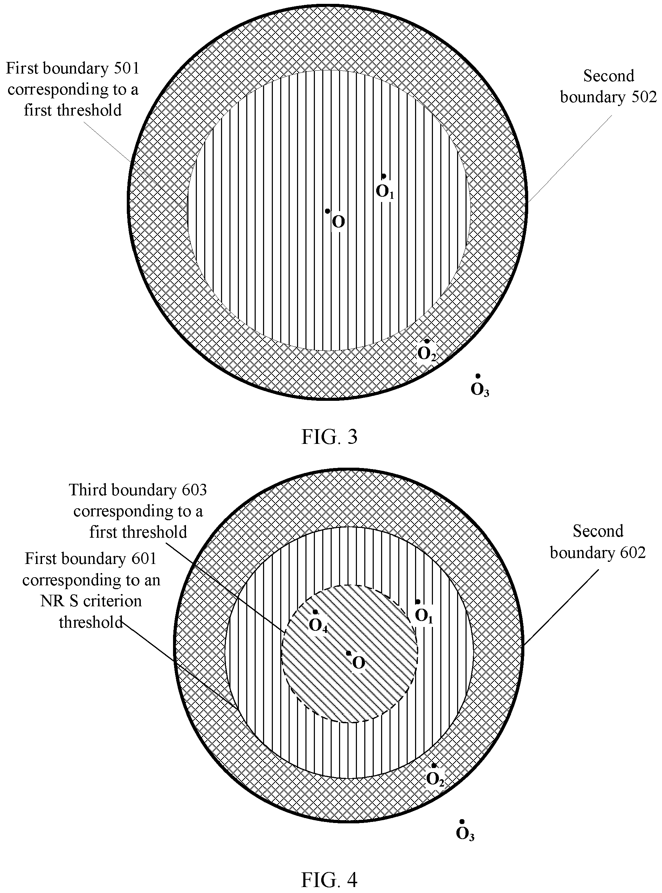

Embodiment 1 is based on a premise that a frequency with a higher priority is not introduced when UE works on a WUR link. Embodiment 1 relates to FIG. 2 and FIG. 3. FIG. 2 is a diagram of a principle of Embodiment 1 of a WUR measurement method according to an embodiment of this application. FIG. 3 is a diagram of another principle of Embodiment 1 of a WUR measurement method according to an embodiment of this application. Embodiment 1 includes Implementation 1 and Implementation 2. Implementation 1 relates to FIG. 2, and Implementation 2 relates to FIG. 3.

### Implementation 1

In Implementation 1, a first threshold is configured for the UE. If the UE works on the WUR link, the UE measures a serving cell by using a reference signal of the WUR link.

In other words, the UE first performs measurement by using the reference signal on the WUR link, to obtain a current measurement result of the WUR link. For example, the current measurement result of the WUR link may include WUR-RSRP and/or WUR-RSRQ.

For example, the first threshold may be configured by a network device (for example, a base station), for example, notified to the UE via a first broadcast message.

For example, the first threshold may be protocol-predefined. For example, the first threshold is preconfigured in the UE before delivery of the UE.

The UE separately performs the following operations based on a relationship between a current measurement result of the WUR link in the serving cell and the first threshold, a relationship between a current measurement result of a NR main link in the serving cell and a NR S criterion threshold, and the like:
(I) When the current measurement result of the WUR link in the serving cell is greater than or equal to the first threshold, the UE works only on the WUR link, and measures the serving cell only by using the reference signal of the WUR link, and does not measure a neighboring cell, to obtain the current measurement result of the WUR link. For example, that the UE works on the WUR link includes that the UE receives a paging message over the WUR link.
   In this case, because the UE does not perform measurement on the NR main link and does not obtain current measurement results of the NR main link in the serving cell and the neighboring cell, the UE does not perform cell reselection.
(II) When the current measurement result of the WUR link in the serving cell is less than the first threshold, and the UE can find a WUR signal, the UE works on the WUR link on the whole. However, in some time periods, the UE switches to the NR main link for RRM measurement. To be specific, a link on which the UE works is switched (for example, periodically switched, for example, a switching periodicity may be a periodicity in which the UE performs RRM measurement on the NR main link) between the WUR link and the NR main link. The UE measures only the serving cell on the WUR link, and the UE may measure the serving cell and/or the neighboring cell on the NR main link based on a measurement configuration indicated by the NR main link. The UE determines, based on a current measurement result of the NR main link and a cell reselection condition, whether to perform cell reselection. The cell reselection condition includes a cell reselection rule and a cell reselection parameter. The cell reselection rule is predefined in a protocol and is preset in the UE. The cell reselection parameter is configured by the network device by using a second broadcast message. For example, the cell reselection rule may be that cell reselection is performed when a specific condition is met within a time period T. The cell reselection parameter may be T, and is configured by the network device by using the second broadcast message.

That the UE works on the WUR link on the whole means that a main function (for example, receiving paging) of the UE is implemented over the WUR link. For example, when a periodicity is 1280 milliseconds (ms), the UE works on the NR main link for 100 ms to measure the serving cell and/or the neighboring cell, and the UE works on the WUR link for 1180 ms. Within the 1180 ms, the UE measures the serving cell on the WUR link, and performs the main function of the UE on the WUR link. For the 1280 ms, the UE works on the WUR link on the whole. Generally, when the UE works on the WUR link on the whole, a time period in which the UE works on the NR main link is less than or far less than a time period in which the UE works on the WUR link.

For example, the measurement configuration indicated by the NR main link may be sent by the network device (for example, the base station) by using a third broadcast message on the NR main link.

Any two or any three of the third broadcast message, the first broadcast message, and the second broadcast message may be a same broadcast message, or may be different broadcast messages.

The measurement configuration indicated by the NR main link includes the NR S criterion threshold. An S criterion corresponds to a NR S criterion threshold. The NR S criterion threshold may be greater than, less than, or equal to the first threshold. Generally, the NR S criterion threshold is less than the first threshold. Therefore, the measurement configuration indicated by the NR main link includes a NR S criterion threshold.

When the current measurement result of the WUR link in the serving cell is less than the first threshold, and the UE finds the WUR signal, the UE switches to the NR main link in at least some time periods to perform RRM measurement. When the UE works on the NR main link, the UE first measures the serving cell by using a reference signal of the NR main link, to obtain the current measurement result of the NR main link in the serving cell.

Then, based on the relationship between the current measurement result of the NR main link in the serving cell and the NR S criterion threshold, and the like, the following cases may be further classified subsequently:
(1) When the current measurement result of the NR main link in the serving cell is greater than or equal to the NR S criterion threshold, the UE switches to the NR main link in some time periods to perform RRM measurement, but works on the WUR link on the whole.

When the UE works on the WUR link, the UE measures the serving cell by using the reference signal of the WUR link, and does not measure the neighboring cell, to obtain the current measurement result of the WUR link in the serving cell.

When the UE works on the NR main link, the UE measures the serving cell only by using the reference signal of the NR main link, and does not measure the neighboring cell, to obtain the current measurement result of the NR main link in the serving cell. The link on which the UE works is switched (for example, periodically switched) between the WUR link and the NR main link.

The UE does not measure the neighboring cell on the NR main link and does not obtain a current measurement result of the NR main link in the neighboring cell. As a result, the UE does not perform cell reselection.

(2) When the current measurement result of the NR main link in the serving cell is less than the NR S criterion threshold, and the UE still finds the WUR signal, the UE switches to the NR main link in some time periods to perform RRM measurement, but works on the WUR link on the whole.

When the UE works on the WUR link, the UE measures the serving cell only by using the reference signal of the WUR link, and does not measure the neighboring cell, to obtain the current measurement result of the WUR link in the serving cell.

When the UE works on the NR main link, the UE measures the serving cell and the neighboring cell by using the reference signal of the NR main link, to obtain current measurement results of the NR main link in the serving cell and the neighboring cell. The current measurement results of the NR main link in the serving cell and the neighboring cell include the current measurement result of the NR main link in the serving cell and the current measurement result of the NR main link in the neighboring cell.

The UE determines, based on the current measurement results of the NR main link in the serving cell and the neighboring cell, and the cell reselection condition, whether to perform cell reselection. A specific cell to be reselected is determined when it is determined to perform cell reselection.

(3) When the current measurement result of the NR main link in the serving cell is less than the NR S criterion threshold, and the UE cannot find the WUR signal, the UE can work only on the NR main link.

In this case, the UE measures the serving cell and the neighboring cell by using the reference signal of the NR main link, to obtain current measurement results of the NR main link in the serving cell and the neighboring cell.

The UE determines, based on the current measurement results of the NR main link in the serving cell and the neighboring cell, and the cell reselection condition, whether to perform cell reselection. A specific cell to be reselected is determined when it is determined to perform cell reselection.

Optionally, in this application, that the UE determines, based on the current measurement results of the NR main link in the serving cell and the neighboring cell, and the cell reselection condition, whether to perform cell reselection includes: The UE performs cell reselection when the current measurement results of the NR main link in the serving cell and the neighboring cell meet the cell reselection condition; or the UE does not perform cell reselection when the current measurement results of the NR main link in the serving cell and the neighboring cell do not meet the cell reselection condition.

It should be noted that, the UE performs cyclic iteration in (I), (II), (1), (2), and (3) of Implementation 1, for example, cyclic iteration based on a specific periodicity. The current measurement result of the NR main link in the serving cell, the current measurement result of the NR main link in the neighboring cell, the current measurement result of the WUR link in the serving cell, and the like are all continuously updated.

Alternatively, in (2) of Implementation 1, when the current measurement result of the NR main link in the serving cell is equal to the NR S criterion threshold, the UE switches to the NR main link in some time periods to perform RRM measurement, but works on the WUR link on the whole. When the UE works on the WUR link, the UE measures the serving cell by using the reference signal of the WUR link, and does not measure the neighboring cell, to obtain the current measurement result of the WUR link in the serving cell. When the UE works on the NR main link, the UE measures the serving cell only by using the reference signal of the NR main link, and does not measure the neighboring cell, to obtain the current measurement result of the NR main link in the serving cell. The link on which the UE works is switched (for example, periodically switched) between the WUR link and the NR main link.

Alternatively, when the current measurement result of the WUR link in the serving cell is equal to the first threshold, and the UE can find the WUR signal, the UE switches between the WUR link and the NR main link, and the UE works on the WUR link on the whole.

Optionally, the measurement configuration indicated by the NR main link may further indicate the UE to measure other content.

Further, with reference to FIG. 2, as shown in FIG. 2, a circle approximately represents coverage, a point O is a center of the circle, the first threshold corresponds to a first boundary 401, the NR S criterion threshold corresponds to a second boundary 402, a point O1 is any point within a range of the first boundary 401, a point O2 is any point within a range of the second boundary 402 and outside the range of the first boundary 401, a point O3 is any point outside the range of the second boundary 402 and within a range of a third boundary 403, and a point O4 is any point outside the range of the third boundary 403. An area within the range of the third boundary 403 is a coverage area of the WUR link. The point O1 within the first boundary 401 indicates that the current measurement result of the WUR link in the serving cell is greater than or equal to the first threshold. The point O2 within the range of the second boundary 402 and outside the range of the first boundary 401 indicates that the current measurement result of the NR main link in the serving cell is greater than or equal to the NR S criterion threshold. The point O3 outside the range of the second boundary 402 indicates that the current measurement result of the NR main link in the serving cell is less than the NR S criterion threshold, and that the UE finds the WUR signal. The point O4 outside the range of the third boundary 403 indicates that the current measurement result of the NR main link in the serving cell is less than the NR S criterion threshold, and the point O4 indicates that the UE cannot find the WUR signal. The current measurement result that is of the NR main link in the serving cell and that corresponds to the point O4 is less than the current measurement result that is of the NR main link in the serving cell and that corresponds to the point O3. The point O1, the point O2, and the point O3 are all located in coverage of the WUR link.
① When the UE is located at the point O1, the UE finds the WUR signal, the UE works only on the WUR link, and measures the serving cell only by using the reference signal of the WUR link, and does not measure the neighboring cell, to obtain the current measurement result of the WUR link in the serving cell.
② When the UE is located at the point O2, the UE can find the WUR signal, and the UE works on the WUR link on the whole. However, in some time periods, the UE switches to the NR main link for RRM measurement. The link on which the UE works may be periodically switched between the WUR link and the NR main link, but the UE works on the WUR link on the whole. When the UE works on the NR main link, the UE measures the serving cell by using the reference signal of the NR main link, and does not measure the neighboring cell, to obtain the current measurement result of the NR main link in the serving cell.
③ When the UE is located at the point O3, the UE can find the WUR signal, and the UE works on the WUR link on the whole. However, in some time periods, the UE switches to the NR main link for RRM measurement. The link on which the UE works may be periodically switched between the WUR link and the NR main link, but the UE works on the WUR link on the whole. When the UE works on the NR main link, the UE measures the serving cell and the neighboring cell by using the reference signal of the NR main link, to obtain the current measurement results of the NR main link in the serving cell and the neighboring cell. The UE determines, based on the current measurement results of the NR main link in the serving cell and the neighboring cell, and the cell reselection condition, whether to perform cell reselection.
④ When the UE is located at the point O4, the UE cannot find the WUR signal, works only on the NR main link, and measures the serving cell and the neighboring cell by using the reference signal of the NR main link, to obtain the current measurement results of the NR main link in the serving cell and the neighboring cell. The UE determines, based on the current measurement results of the NR main link in the serving cell and the neighboring cell, and the cell reselection condition, whether to perform cell reselection.

Optionally, after the link on which the UE works is switched to the NR main link, the serving cell and/or the neighboring cell may be measured by using a relaxed measurement requirement, so that a frequency of switching, from the WUR link to the NR main link, the link on which the UE works can be reduced, and duration in which the UE works on the WUR link is increased, thereby reducing power consumption of the UE.

For example, a measurement gap on the NR main link is set to I when the relaxed measurement requirement is not used. Generally, the measurement gap I on the NR main link when the relaxed measurement requirement is not used may be understood as a measurement gap of the NR main link in the serving cell when the relaxed measurement requirement is not used. When the serving cell and/or the neighboring cell are/is measured, a first relaxed measurement requirement is used. In this case, the measurement gap on the NR main link is K1*I. K1 is a positive number greater than 1.

Further, the measurement gap on the NR main link may be subdivided based on a measurement object.

For example, when the serving cell is measured, the first relaxed measurement requirement is used. In this case, the measurement gap on the NR main link is K1*I. When the neighboring cell is measured, a second relaxed measurement requirement is used. In this case, the measurement gap on the NR main link is K2*I. Both K1 and K2 are positive numbers greater than 1. K1 may be greater than, less than, or equal to K2. Preferably, K1 is less than K2.

Alternatively, when the serving cell is measured, the relaxed measurement requirement is not used. In this case, the measurement gap on the NR main link is still I. When the neighboring cell is measured, the second relaxed measurement requirement is used. In this case, the measurement gap on the NR main link is K2*I. K2 is a positive number greater than 1.

Alternatively, when the serving cell is measured, the first relaxed measurement requirement is used. In this case, the measurement gap on the NR main link is K1*I. When the neighboring cell is measured, the relaxed measurement requirement is not used. In this case, the measurement gap on the NR main link is still I. K1 is a positive number greater than 1.

Optionally, at least one of K1 and K2 is an integer. Preferably, both K1 and K2 are integers.

Optionally, the relaxed measurement requirement may be used together with a moving speed of the UE.

For example, when a change value of the WUR-RSRP and/or the WUR-RSRQ measured in first duration is less than a first preset threshold, the moving speed of the UE is in a low-speed state; or when the change value of the WUR-RSRP and/or the WUR-RSRQ measured in the first duration is greater than or equal to the first preset threshold, the moving speed of the UE is not in the low-speed state.

For example, when a change value of NR-RSRP and/or NR-RSRQ measured in second duration is less than a second preset threshold, the moving speed of the UE is in the low-speed state; or when the change value of the NR-RSRP and/or the NR-RSRQ measured in the second duration is greater than or equal to the second preset threshold, the moving speed of the UE is not in the low-speed state.

For example, when the change value of the WUR-RSRP and/or the WUR-RSRQ measured in the first duration is less than the first preset threshold, and the change value of the NR-RSRP and/or the NR-RSRQ measured in the first duration is less than the second preset threshold, the moving speed of the UE is in the low-speed state; and otherwise, the moving speed of the UE is not in the low-speed state.

For example, when the change value of the WUR-RSRP and/or the WUR-RSRQ measured in the second duration is less than the first preset threshold, and the change value of the NR-RSRP and/or the NR-RSRQ measured in the second duration is less than the second preset threshold, the moving speed of the UE is in the low-speed state; and otherwise, the moving speed of the UE is not in the low-speed state.

Both the first duration and the second duration are a period of time, and the first duration and the second duration may be the same or may be different.

For example, the first preset threshold may be greater than, less than, or equal to the second preset threshold.

For example, when the moving speed of the UE is in the low-speed state and after the link on which the UE works is switched to the NR main link, the serving cell and/or the neighboring cell may be measured by using the first relaxed measurement requirement. When the moving speed of the UE is not in the low-speed state and after the link on which the UE works is switched to the NR main link, the relaxed measurement requirement is not used to measure the serving cell and/or the neighboring cell. Optionally, the measurement first duration or second duration based on which whether the moving speed of the UE is in the low-speed state is determined overlaps or is adjacent to a time point at which the link on which the UE works is switched to the NR main link.

For example, when the moving speed of the UE is in the low-speed state and after the link on which the UE works is switched to the NR main link, the serving cell and/or the neighboring cell may be measured by using the first relaxed measurement requirement. When the moving speed of the UE is not in the low-speed state and after the link on which the UE works is switched to the NR main link, the serving cell and/or the neighboring cell may be measured by using the second relaxed measurement requirement. A measurement gap corresponding to the second relaxed measurement requirement is K2*I, and a measurement gap corresponding to the first relaxed measurement requirement is K1 *I. Both K1 and K2 are positive numbers greater than 1. Preferably, K2 is greater than K1.

Optionally, at least one of K1 and K2 is an integer. Preferably, both K1 and K2 are integers.

The foregoing discusses only the measurement gap on the NR main link after the link on which the UE works is switched to the NR main link. After the link on which the UE works is switched from the NR main link to the WUR link, a measurement gap on the WUR link may be the same as or different from the measurement gap on the NR main link.

For example, the measurement gap on the WUR link may be independent of the measurement gap on the NR main link.

For example, the relaxed measurement requirement may not be used, or may be used for measurement on the WUR link. When the relaxed measurement requirement is used for measurement on the WUR link, a relaxed measurement requirement the same as that on the NR main link may be used, or a relaxed measurement requirement different from that on the NR main link may be used.

Optionally, it may be specified that UE having a WUR capability or UE having an energy saving preference/interest (preference/interest) considers a frequency, on which WUR can be supported, as a frequency with a highest priority, or considers a frequency, on which WUR cannot be supported, as a frequency with a lowest priority. Generally, the UE having the WUR capability may be considered as having an energy saving preference/interest, or UE working on the WUR link may be considered as having the energy saving preference/interest. "/" means "or".

Optionally, frequencies on which WUR is supported or deployed may be indicated to the UE by using a third broadcast message of the network device (for example, a base station), or configured for the UE by using an upper layer (Upper Layer), or indicated to the UE in a manner such as protocol predefinition.

Because the WUR link of the serving cell accessed by the UE has a highest frequency priority, when the current measurement result of the WUR link in the serving cell is greater than or equal to the first threshold, the UE does not need to measure the reference signal of the neighboring cell on the NR main link, and does not need to measure the reference signal of the serving cell on the NR main link, and only needs to continue to measure the serving cell on the WUR link. Only when the current measurement result of the WUR link in the serving cell is less than the first threshold, the serving cell and the neighboring cell need to be measured on the NR main link, the serving cell needs to be measured on the WUR link, and measurement is performed by switching between the NR main link and the WUR link.

Technical effects of Implementation 1: In comparison with a technology in which the UE works on the WUR link and performs measurement only by using the reference signal of the WUR link, or the UE works on the NR main link and performs measurement only by using the reference signal of the NR main link, in Implementation 1, a plurality of thresholds are provided, so that the UE works on different links in a plurality of different cases. In a first case, the UE works on the WUR link. In a second case, the link on which the UE works is switched between the WUR link and the NR main link, so as to monitor the current measurement result of the NR main link in the serving cell and the current measurement result of the NR main link in the neighboring cell in a timely manner. In this way, the link on which the UE works and a measurement manner can be dynamically adjusted based on a change of a case, so that sufficient time can be reserved for performing cell reselection in a timely manner, and low power consumption can also be ensured, thereby achieving a balance between low power consumption and timely cell reselection. In addition, Implementation 1 is also compatible with the previous measurement and cell reselection mechanism. Further, a third case may be added between the two cases.

### Implementation 2

Implementation 2 is an implementation that further optimizes Implementation 1. In Implementation 2, the NR S criterion threshold is no longer required, and only the first threshold is required.

In Implementation 2, the first threshold is configured for the UE. If the UE works on the WUR link, the UE measures the serving cell by using the reference signal of the WUR link.

The UE may perform the following operations based on the relationship between the current measurement result of the WUR link in the serving cell and the first threshold, and the like:
(I) When the current measurement result of the WUR link in the serving cell is greater than or equal to the first threshold, the UE works only on the WUR link, and measures the serving cell only by using the reference signal of the WUR link, and does not measure the neighboring cell, to obtain the current measurement result of the WUR link in the serving cell.
(II) When the current measurement result of the WUR link in the serving cell is less than the first threshold, and the UE finds the WUR signal, the UE works on the WUR link on the whole. However, in some time periods, the UE switches to the NR main link for RRM measurement.

The link on which the UE works is switched (for example, periodically switched) between the WUR link and the NR main link. However, because a main function of the UE is implemented by the UE working on the WUR link, the UE works on the WUR link on the whole.

When the UE works on the WUR link, the UE measures the serving cell by using the reference signal of the WUR link, and does not measure the neighboring cell, to obtain the current measurement result of the WUR link in the serving cell.

When the UE works on the NR main link, the UE measures the serving cell and the neighboring cell by using the reference signal of the NR main link, to obtain the current measurement results of the NR main link in the serving cell and the neighboring cell.

The UE determines, based on the current measurement results of the NR main link in the serving cell and the neighboring cell, and the cell reselection condition, whether to perform cell reselection; and when determining to perform cell reselection, determines a specific cell to be reselected.

(III) When the current measurement result of the WUR link in the serving cell is less than the first threshold, and the UE cannot find the WUR signal, the UE works only on the NR main link. In this case, the UE measures the serving cell and the neighboring cell by using the reference signal of the NR main link, to obtain the current measurement results of the NR main link in the serving cell and the neighboring cell.

The UE determines, based on the current measurement results of the NR main link in the serving cell and the neighboring cell, and the cell reselection condition, whether to perform cell reselection; and when determining to perform cell reselection, determines a specific cell to be reselected.

Alternatively, when the current measurement result of the WUR link in the serving cell is equal to the first threshold, and the UE finds the WUR signal, the UE works on the WUR link on the whole. However, in some time periods, the UE switches to the NR main link for RRM measurement. The link on which the UE works is switched (for example, periodically switched) between the WUR link and the NR main link. However, because the main function of the UE is implemented by the UE working on the WUR link, the UE works on the WUR link on the whole. When the UE works on the WUR link, the UE measures the serving cell by using the reference signal of the WUR link, and does not measure the neighboring cell, to obtain the current measurement result of the WUR link in the serving cell. When the UE works on the NR main link, the UE measures the serving cell and the neighboring cell by using the reference signal of the NR main link, to obtain the current measurement results of the NR main link in the serving cell and the neighboring cell.

Optionally, the measurement configuration indicated by the NR main link may further indicate the UE to measure other content.

Further, with reference to FIG. 3, as shown in FIG. 3, a circle approximately represents coverage, a point O is a center of the circle, the first threshold corresponds to a first boundary 501, a point O1 is any point within a range of the first boundary 501, a point O2 is any point within a range of a second boundary 502 and outside the range of the first boundary 501, and a point O3 is any point outside the range of the second boundary 502. The point O1 indicates that the current measurement result of the WUR link in the serving cell is greater than or equal to the first threshold. The point O2 indicates that the current measurement result of the WUR link in the serving cell is less than the first threshold, and that the UE finds the WUR signal. The point O3 indicates that the current measurement result of the WUR link in the serving cell is less than the first threshold, and the UE cannot find the WUR signal.
① When the UE is located at the point O1, the UE works only on the WUR link, and measures the serving cell only by using the reference signal of the WUR link, and does not measure the neighboring cell, to obtain the current measurement result of the WUR link in the serving cell.
② When the UE is located at the point O2, the UE finds the WUR signal, and the UE works on the WUR link on the whole. However, in some time periods, the UE switches to the NR main link for RRM measurement.

When the UE works on the WUR link, the UE measures the serving cell by using the reference signal of the WUR link, and does not measure the neighboring cell, to obtain the current measurement result of the WUR link in the serving cell.

When the UE works on the NR main link, the UE measures the serving cell and the neighboring cell by using the reference signal of the NR main link, to obtain the current measurement results of the NR main link in the serving cell and the neighboring cell.

The UE determines, based on the current measurement results of the NR main link in the serving cell and the neighboring cell, and the cell reselection condition, whether to perform cell reselection; and when determining to perform cell reselection, determines the specific cell to be reselected.
③ When the UE is located at the point O3, the UE cannot find the WUR signal, works only on the NR main link, and measures the serving cell and the neighboring cell by using the reference signal of the NR main link, to obtain the current measurement results of the NR main link in the serving cell and the neighboring cell. The UE determines, based on the current measurement results of the NR main link in the serving cell and the neighboring cell, and the cell reselection condition, whether to perform cell reselection; and when determining to perform cell reselection, determines the specific cell to be reselected.

In Implementation 2, only one first threshold is set for differentiation, and two thresholds are no longer set for differentiation. The first threshold in Implementation 2 may be the same as the first threshold in Implementation 1, may be the same as the NR S criterion threshold in Implementation 1, or may be a threshold between the first threshold and the NR S criterion threshold in Implementation 1 (for example, an average value of the first threshold and the NR S criterion threshold).

Other content in Implementation 2 is the same as corresponding content in Implementation 1, and details are not described herein again. The content in Implementation 1 may be directly cited. To be specific, when no special description is provided or when there is no content contradictory with the foregoing content of Implementation 2, the content of Implementation 1 also belongs to the content of Implementation 2, and is entirely cited into Implementation 2.

Alternatively, in Implementation 2, the first threshold may be no longer required, and only the NR S criterion threshold is required. To be specific, the first threshold in the foregoing Implementation 2 may be replaced with the NR S criterion threshold. In this case, 501 in FIG. 3 is the first boundary corresponding to the NR S criterion threshold.

Technical effects of Implementation 2: In comparison with the technology in which the UE works on the WUR link and performs measurement only by using the reference signal of the WUR link, or the UE works on the NR main link and performs measurement only by using the reference signal of the NR main link, in Implementation 2, a threshold is provided, so that in one case, the link on which the UE works is the WUR link, and in the other case, the link on which the UE works is switched between the WUR link and the NR main link, so as to monitor the current measurement result of the NR main link in the serving cell and the current measurement result of the NR main link in the neighboring cell in a timely manner. In this way, the link on which the UE works and a measurement manner can be dynamically adjusted based on a change of a case, so that sufficient time can be reserved for performing cell reselection in a timely manner, and low power consumption can also be ensured, thereby achieving a balance between low power consumption and timely cell reselection. In addition, Implementation 2 is also compatible with the previous measurement and cell reselection mechanism.

### Embodiment 2

Embodiment 2 is based on a premise that a frequency with a higher priority is introduced when UE works on a WUR link. It should be noted that one frequency has one priority, and whether the frequency is a frequency on which the WUR link is deployed (or supported) or a frequency on which the NR main link is deployed (or supported) is not distinguished. To be specific, for a frequency, only the WUR link may be deployed (or supported), only the NR main link may be deployed (or supported), or both the WUR link and the NR main link may be deployed (or supported) on the frequency.

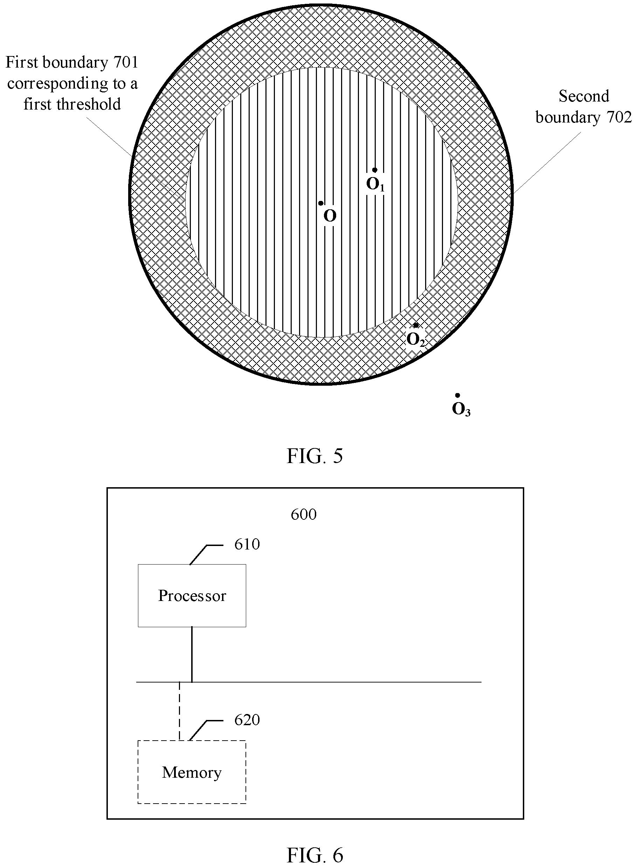

Embodiment 2 relates to FIG. 4 and FIG. 5. FIG. 4 is a diagram of a principle of Embodiment 2 of a WUR measurement method according to an embodiment of this application. FIG. 5 is a diagram of another principle of Embodiment 2 of a WUR measurement method according to an embodiment of this application. Embodiment 2 includes Implementation 3 and Implementation 4. Implementation 3 relates to FIG. 4, and Implementation 4 relates to FIG. 5.

In Embodiment 2, a priority of a frequency of a serving cell of the UE may not be the highest. A priority of a frequency of a neighboring cell of the UE may be higher than the priority of the frequency of the serving cell of the UE. The serving cell is a cell on which the UE currently camps.

Before the technical solution in Implementation 3 or Implementation 4 is executed, whether the priority of the frequency of the neighboring cell is higher than the priority of the frequency of the serving cell needs to be first determined.

When there is at least one frequency that is of a neighboring cell and that has a priority higher than the priority of the frequency of the serving cell, the technical solution of Implementation 3 or Implementation 4 is executed.

When there is no at least one frequency that is of a neighboring cell and that has a priority greater than the priority of the frequency of the serving cell, the technical solution in Embodiment 1 is executed.

### Implementation 3

In Implementation 3, after the UE enters coverage of the NR main link, or the UE is powered on only after the UE is in the coverage of the NR main link, or in another manner, the UE first camps on the serving cell over the NR main link, so as to obtain the priority of the frequency of the neighboring cell from a network device over the NR main link. The UE learns, through comparison, that the priority of the frequency of the serving cell is lower than or equal to the priority of the frequency of the neighboring cell. The priority of the frequency of the serving cell may be configured by the network device for the UE, for example, configured for the UE by using a broadcast message (for example, a first broadcast message, a second broadcast message, a third broadcast message, or a fourth broadcast message) or a dedicated message. Alternatively, the priority of the frequency of the neighboring cell may be learned by the UE from the network device over the WUR link. In this case, both the priority of the frequency of the serving cell and the priority of the frequency of the neighboring cell use a current frequency priority configuration of the NR main link, so as to be compatible with the previous frequency priority mechanism and further compatible with the previous cell reselection mechanism.

Any two, any three, or any four of the first broadcast message, the second broadcast message, the third broadcast message, and the fourth broadcast message may be a same broadcast message, or may be different broadcast messages.

In addition, the UE can further learn a NR S criterion threshold.

If the UE has a WUR capability, and a NR system also supports WUR, after the UE finds a WUR signal (in this case, the UE also finds a NR signal), the UE switches to the WUR link to save energy. As described above, in some time periods, the UE switches back to the NR main link. The UE works on the WUR link on the whole. Therefore, when the UE works on the NR main link, the UE may measure the serving cell, to obtain a current measurement result of the NR main link in the serving cell. When the UE works on the WUR link, the UE may measure the serving cell, to obtain a current measurement result of the WUR link in the serving cell.
(I) When the current measurement result of the NR main link in the serving cell is greater than the NR S criterion threshold, the UE works on the WUR link on the whole. However, in some time periods, the UE switches to the NR main link for RRM measurement. Optionally, the UE periodically switches between the WUR link and the NR main link.

When the UE works on the NR main link, the UE measures a neighboring cell with a first priority and the serving cell, to obtain current measurement results of the NR main link in the neighboring cell with the first priority and the serving cell. The first priority is higher than the priority of the serving cell.

When the UE works on the WUR link, the UE measures the serving cell, to obtain the current measurement result of the WUR link in the serving cell.

The UE determines, based on the current measurement results of the NR main link in the neighboring cell with the first priority and the serving cell, and a cell reselection condition, whether to perform cell reselection; and when determining to perform cell reselection, determines a specific cell to be reselected. For example, the UE may select a first neighboring cell that meets the cell reselection condition from neighboring cells with the first priority, and access the first neighboring cell, and then the first neighboring cell is updated as the serving cell, and the serving cell before the update becomes one of the neighboring cells.

(II) When the current measurement result of the NR main link in the serving cell is less than the NR S criterion threshold, and the UE finds the WUR signal, the UE works on the WUR link on the whole. However, in some time periods, the UE switches to the NR main link for RRM measurement. Optionally, the UE periodically switches between the WUR link and the NR main link.

When the UE works on the NR main link, the UE measures the serving cell and the neighboring cell, to obtain current measurement results of the NR main link in the serving cell and the neighboring cell. The priority of the neighboring cell is not limited. The neighboring cell herein includes the neighboring cell with the first priority and a neighboring cell whose frequency priority is equal to or lower than the frequency priority of the serving cell. To be specific, the neighboring cell herein includes all neighboring cells.

When the UE works on the WUR link, the UE measures the serving cell, to obtain the current measurement result of the WUR link in the serving cell.

The UE determines, based on the current measurement results of the NR main link in the serving cell and the neighboring cell, and the cell reselection condition, whether to perform cell reselection; and when determining to perform cell reselection, determines the specific cell to be reselected. For example, the UE may select a first neighboring cell that meets the cell reselection condition from the neighboring cells, and access the first neighboring cell, and then the first neighboring cell is updated as the serving cell, and the serving cell before the update becomes one of the neighboring cells.

(III) When the current measurement result of the NR main link in the serving cell is less than the NR S criterion threshold, and the UE cannot find the WUR signal, the UE works only on the NR main link. The UE measures the serving cell and the neighboring cell, to obtain the current measurement results of the NR main link in the serving cell and the neighboring cell. The neighboring cell herein includes the neighboring cell with the first priority and a neighboring cell whose frequency priority is equal to or lower than the frequency priority of the serving cell. To be specific, the neighboring cell herein includes all neighboring cells.

The UE determines, based on the current measurement results of the NR main link in the serving cell and the neighboring cell, and the cell reselection condition, whether to perform cell reselection; and when determining to perform cell reselection, determines the specific cell to be reselected. For example, the UE may select a first neighboring cell that meets the cell reselection condition from the neighboring cells, and access the first neighboring cell, and then the first neighboring cell is updated as the serving cell, and the serving cell before the update becomes one of the neighboring cells.

Alternatively, in (I) of Implementation 3, when the current measurement result of the NR main link in the serving cell is equal to the NR S criterion threshold, and the UE finds the WUR signal, the UE works on the WUR link on the whole. However, in some time periods, the UE switches to the NR main link for RRM measurement. Optionally, the UE periodically switches between the WUR link and the NR main link. When the UE works on the WUR link, the UE measures the serving cell, to obtain the current measurement result of the WUR link in the serving cell. When the UE works on the NR main link, the UE measures the neighboring cell with the first priority and the serving cell, to obtain the current measurement results of the NR main link in the neighboring cell with the first priority and the serving cell. The first priority is higher than the priority of the serving cell. The UE determines, based on the current measurement results of the NR main link in the neighboring cell with the first priority and the serving cell, and the cell reselection condition, whether to perform cell reselection; and when determining to perform cell reselection, determines the specific cell to be reselected.

Optionally, before (I) in Implementation 3, the technical solution of Implementation 3 may further include:
(a) When the current measurement result of the WUR link in the serving cell is greater than or equal to a first threshold, the UE works only on the WUR link, and measures the serving cell only by using a reference signal of the WUR link, and does not measure the neighboring cell, to obtain the current measurement result of the WUR link in the serving cell.
(b) When the current measurement result of the WUR link in the serving cell is less than the first threshold, and the UE finds the WUR signal, the UE works on the WUR link on the whole. However, in some time periods, the UE switches to the NR main link for RRM measurement. To be specific, the link on which the UE works is switched (for example, periodically switched, and for example, a switching periodicity may be a periodicity for RRM measurement performed by the UE on the NR main link) between the WUR link and the NR main link. The UE measures only the serving cell on the WUR link, to obtain the current measurement result of the WUR link in the serving cell. When the UE works on the NR main link, the UE first measures the serving cell by using a reference signal of the NR main link, to obtain the current measurement result of the NR main link in the serving cell.

Then, based on a relationship between the current measurement result of the NR main link in the serving cell and the NR S criterion threshold, and the like, the foregoing (I) and (II) in Implementation 3 may be further obtained through division. Details are not described herein again. For details, refer to the foregoing description.

Further, with reference to FIG. 4, as shown in FIG. 4, a circle approximately represents coverage, a point O is a center of the circle, the NR S criterion threshold corresponds to a first boundary 601, a point O1 is any point within a range of the first boundary 601, a point O2 is any point within a range of a second boundary 602 and outside the range of the first boundary 601, and a point O3 is any point outside the range of the second boundary 602. The point O1 indicates that the current measurement result of the NR main link in the serving cell is greater than or equal to the NR S criterion threshold. The point O2 indicates that the current measurement result of the NR main link in the serving cell is less than the NR S criterion threshold, and that the UE finds the WUR signal. The point O3 indicates that the current measurement result of the NR main link in the serving cell is less than the NR S criterion threshold, and that the UE cannot find the WUR signal.
① When the UE is located at the point O1, the UE works on the WUR link on the whole, but in some time periods, switches to the NR main link for RRM measurement, to switch between the WUR link and the NR main link.

When the UE works on the WUR link, the UE measures the serving cell by using the reference signal of the WUR link, to obtain the current measurement result of the WUR link in the serving cell.

When the UE works on the NR main link, the UE measures the neighboring cell with the first priority and the serving cell by using the reference signal of the NR main link, to obtain the current measurement results of the NR main link in the neighboring cell with the first priority and the serving cell. The first priority is higher than the priority of the serving cell. The current measurement results of the NR main link in the neighboring cell with the first priority and the serving cell include the current measurement result of the NR main link in the serving cell and the current measurement result of the NR main link in the neighboring cell with the first priority.

The UE determines, based on the current measurement results of the NR main link in the neighboring cell with the first priority and the serving cell, and the cell reselection condition, whether to perform cell reselection. A specific cell to be reselected is determined when it is determined to perform cell reselection.
② When the UE is located at the point O2, the UE works on the WUR link on the whole, but in some time periods, switches to the NR main link for RRM measurement, to switch between the WUR link and the NR main link.

When the UE works on the WUR link, the UE measures the serving cell by using the reference signal of the WUR link, to obtain the current measurement result of the WUR link in the serving cell.

When the UE works on the NR main link, the UE measures the serving cell and the neighboring cell by using the reference signal of the NR main link, to obtain the current measurement results of the NR main link in the serving cell and the neighboring cell. The neighboring cell includes the neighboring cell with the first priority and a neighboring cell whose frequency priority is equal to or lower than the frequency priority of the serving cell. In other words, the neighboring cell herein includes all neighboring cells.

The UE determines, based on the measurement results of the NR main link in the serving cell and the neighboring cell, and the cell reselection condition, whether to perform cell reselection. A specific cell to be reselected is determined when it is determined to perform cell reselection.
③ When the UE is located at the point O3, the UE cannot find the WUR signal, works only on the NR main link, and measures the serving cell and the neighboring cell by using the reference signal of the NR main link, to obtain the current measurement results of the NR main link in the serving cell and the neighboring cell. The UE determines, based on the current measurement results of the NR main link in the serving cell and the neighboring cell, and the cell reselection condition, whether to perform cell reselection; and when determining to perform cell reselection, determines the specific cell to be reselected.

Optionally, FIG. 4 may further include a point O4 and a third boundary 603 that corresponds to the first threshold. The point O4 is any point within a range of the third boundary 603. The point O4 indicates that the current measurement result of the WUR link in the serving cell is greater than or equal to the first threshold. Therefore, ④ may be further included.
④ When the UE is located at the point O4, the UE works only on the WUR link, and measures the serving cell only by using the reference signal of the WUR link, and does not measure the neighboring cell, to obtain the current measurement result of the WUR link in the serving cell.

Optionally, in Implementation 3, a relaxed measurement requirement may be combined.

A specific combination manner may be as follows:
A measurement gap on the NR main link is set to I when the relaxed measurement requirement is not used. Generally, the measurement gap I on the NR main link when the relaxed measurement requirement is not used may be understood as a measurement gap of the NR main link in the serving cell when the relaxed measurement requirement is not used.
(1) When the current measurement result of the NR main link in the serving cell is greater than or equal to the NR S criterion threshold, after the link on which the UE works is switched to the NR main link, a first relaxed measurement requirement may be used when the neighboring cell with the first priority and/or the serving cell are/is measured. In this case, the measurement gap on the NR main link is K1*I. K1 is a positive number greater than 1.

For example, when the neighboring cell with the first priority is measured, a second relaxed measurement requirement is used. In this case, the measurement gap on the NR main link is K2*I. When the serving cell is measured, the relaxed measurement requirement is not used.

When the current measurement result of the NR main link in the serving cell is less than the NR S criterion threshold, after the link on which the UE works is switched to the NR main link, a relaxed measurement requirement may be used when the neighboring cell with the first priority and/or the serving cell are/is measured. In this case, the measurement gap on the NR main link is K2*I. K2 is a positive number greater than 1.

K1 may be greater than, less than, or equal to K2. Preferably, K1 is less than or equal to K2.

Optionally, at least one of K1 and K2 is an integer. Preferably, both K1 and K2 are integers.
(2) When the current measurement result of the NR main link in the serving cell is greater than or equal to the first threshold, after the link on which the UE works is switched to the NR main link, the first relaxed measurement requirement may be used when the serving cell is measured. In this case, the measurement gap on the NR main link is K1*I. K1 is a positive number greater than 1.

When the current measurement result of the NR main link in the serving cell is less than the NR S criterion threshold, after the link on which the UE works is switched to the NR main link, a third relaxed measurement requirement may be used when the serving cell is measured, and in this case, the measurement gap on the NR main link is K3*I. A fourth relaxed measurement requirement is used when the neighboring cell is measured, and in this case, the measurement gap on the NR main link is K4*I. Both K3 and K4 are positive numbers greater than 1.

One of any two of K1, K2, K3, and K4 may be greater than, less than, or equal to the other one.

Optionally, K1 is less than or equal to K2. Optionally, K3 is less than or equal to K4. Optionally, K1 is greater than or equal to K3. Optionally, K2 is greater than or equal to K4.

Optionally, at least one of K1, K2, K3, or K4 is an integer. Preferably, K1, K2, K3, and K4 are all integers.

Other content in Implementation 3 in Embodiment 2 is the same as corresponding content in Implementation 1 in Embodiment 1, and details are not described herein again. The content in Implementation 1 in Embodiment 1 may be directly cited. To be specific, when no special description is provided or when there is no content contradictory with the foregoing content of Implementation 3 in Embodiment 2, the content of Implementation 1 in Embodiment 1 also belongs to the content of Implementation 3 in Embodiment 2 and is entirely cited into Implementation 3 in Embodiment 2.

Technical effects of Implementation 3 include technical effects of Implementation 1 and Implementation 2, and details are not described herein again.

### Implementation 4

In Implementation 4, after the UE enters coverage of the NR main link, or the UE is powered on only after the UE is in the coverage of the NR main link, or in another manner, the UE first camps on the serving cell over the NR main link, so as to obtain the priority of the frequency of the neighboring cell from a network device over the NR main link. The UE learns, through comparison, that the priority of the frequency of the serving cell is lower than or equal to the priority of the frequency of the neighboring cell. The priority of the frequency of the serving cell may be configured by the network device for the UE, for example, configured for the UE by using the broadcast message (for example, the first broadcast message, the second broadcast message, the third broadcast message, or a fourth broadcast message) or the dedicated message. Alternatively, the priority of the frequency of the neighboring cell may be learned by the UE from the network device over the WUR link. In this case, both the priority of the frequency of the serving cell and the priority of the frequency of the neighboring cell use a first frequency priority configuration. The first frequency priority configuration is a new frequency priority configuration introduced in Implementation 4. The first frequency priority configuration may be sent by the network device to the UE over the NR main link or the WUR link. In addition, an existing frequency priority configuration (which may also be referred to as a second frequency priority configuration) is not excluded in Implementation 4. Therefore, Implementation 4 may be compatible with the previous frequency priority mechanism, and is further compatible with the previous cell reselection mechanism.

Any two, any three, or any four of the first broadcast message, the second broadcast message, the third broadcast message, and the fourth broadcast message may be a same broadcast message, or may be different broadcast messages.

If communication between the UE and the network device indicates that the UE has the WUR capability, and that the NR system also supports WUR, after the UE finds the WUR signal (in this case, the UE also finds the NR signal), the UE switches to the WUR link to save energy. As described above, in some time periods, the UE switches back to the NR main link. The UE works on the WUR link on the whole. Therefore, when the UE works on the NR main link, the UE may measure the serving cell, to obtain the current measurement result of the NR main link in the serving cell. When the UE works on the WUR link, the UE may measure the serving cell, to obtain the current measurement result of the WUR link in the serving cell.
(I) When the current measurement result of the WUR link in the serving cell is greater than or equal to the first threshold, the UE works on the WUR link on the whole. However, in some time periods, the UE switches to the NR main link for RRM measurement. Optionally, the UE periodically switches between the WUR link and the NR main link.

When the UE works on the NR main link, the UE measures the serving cell, to obtain the current measurement result of the NR main link in the serving cell. The first priority is higher than the priority of the serving cell. The first priority complies with the first frequency priority configuration.

When the UE works on the WUR link, the UE measures the neighboring cell with the first priority and the serving cell, to obtain the current measurement results of the WUR link in the neighboring cell with the first priority and the serving cell. The current measurement results of the WUR link in the neighboring cell with the first priority and the serving cell include the current measurement result of the WUR link in the serving cell and the current measurement result of the WUR link in the neighboring cell with the first priority.

The UE determines, based on the current measurement results of the NR main link in the neighboring cell with the first priority and the serving cell, and the cell reselection condition, whether to perform cell reselection; and when determining to perform cell reselection, determines the specific cell to be reselected. For example, the UE may select the first neighboring cell that meets the cell reselection condition from neighboring cells with the first priority, and access the first neighboring cell, and then the first neighboring cell is updated as the serving cell, and the serving cell before the update becomes one of the neighboring cells.

(II) When the current measurement result of the WUR link in the serving cell is less than the first threshold, and the UE finds the WUR signal, the UE works on the WUR link on the whole. However, in some time periods, the UE switches to the NR main link for RRM measurement. Optionally, the UE periodically switches between the WUR link and the NR main link.

When the UE works on the NR main link, the UE measures the serving cell and the neighboring cell, to obtain the current measurement results of the NR main link in the serving cell and the neighboring cell. The priority of the neighboring cell is not limited. The neighboring cell herein includes the neighboring cell with the first priority and a neighboring cell whose frequency priority is equal to or lower than the frequency priority of the serving cell. To be specific, the neighboring cell herein includes all neighboring cells.

When the UE works on the WUR link, the UE measures the serving cell, to obtain the current measurement result of the WUR link in the serving cell.

The UE determines, based on the current measurement results of the NR main link in the serving cell and the neighboring cell, and the cell reselection condition, whether to perform cell reselection; and when determining to perform cell reselection, determines the specific cell to be reselected. For example, the UE may select the first neighboring cell that meets the cell reselection condition from the neighboring cells, and access the first neighboring cell, and then the first neighboring cell is updated as the serving cell.

(III) When the UE cannot find the WUR signal, the UE works only on the NR main link.

When the UE works on the NR main link, the UE measures the serving cell and the neighboring cell, to obtain the current measurement result of the NR main link in the serving cell.

When the UE works on the NR main link, the UE measures the serving cell and the neighboring cell, to obtain the current measurement results of the NR main link in the serving cell and the neighboring cell. The neighboring cell herein includes the neighboring cell with the first priority and a neighboring cell whose frequency priority is equal to or lower than the frequency priority of the serving cell. To be specific, the neighboring cell herein includes all neighboring cells.

The UE determines, based on the current measurement results of the NR main link in the serving cell and the neighboring cell, and the cell reselection condition, whether to perform cell reselection; and when determining to perform cell reselection, determines the specific cell to be reselected. For example, the UE may select the first neighboring cell that meets the cell reselection condition from the neighboring cells, and access the first neighboring cell, and then the first neighboring cell is updated as the serving cell, and the serving cell before the update becomes one of the neighboring cells.

Alternatively, in (I) of Implementation 4, when the current measurement result of the WUR link is equal to the first threshold, and the UE finds the WUR signal, the UE works on the WUR link on the whole. However, in some time periods, the UE switches to the NR main link for RRM measurement. Optionally, the UE periodically switches between the WUR link and the NR main link. When the UE works on the NR main link, the UE measures the serving cell and the neighboring cell, to obtain the current measurement results of the NR main link in the serving cell and the neighboring cell. The priority of the neighboring cell is not limited. The neighboring cell herein includes the neighboring cell with the first priority and a neighboring cell whose frequency priority is equal to or lower than the frequency priority of the serving cell. To be specific, the neighboring cell herein includes all neighboring cells. When the UE works on the WUR link, the UE measures the serving cell, to obtain the current measurement result of the WUR link in the serving cell. The UE determines, based on the current measurement results of the NR main link in the serving cell and the neighboring cell, and the cell reselection condition, whether to perform cell reselection; and when determining to perform cell reselection, determines the specific cell to be reselected.

Further, with reference to FIG. 5, as shown in FIG. 5, a circle approximately represents coverage, a point O is a center of the circle, the first threshold corresponds to a first boundary 701, a point O1 is any point within a range of the first boundary 701, a point O2 is any point within a range of a second boundary 702 and outside the range of the first boundary 701, and a point O3 is any point outside the range of the second boundary 702. The point O1 indicates that the current measurement result of the WUR link in the serving cell is greater than or equal to the first threshold. The point O2 indicates that the current measurement result of the WUR link in the serving cell is less than the first threshold, and that the UE finds the WUR signal. The point O3 indicates that the UE cannot find the WUR signal.
① When the UE is located at the point O1, the UE works on the WUR link on the whole, but works on the NR main link in some time periods, to switch between the WUR link and the NR main link.

When the UE works on the WUR link, the UE measures the serving cell by using the reference signal of the WUR link, to obtain the current measurement result of the WUR link in the serving cell.

When the UE works on the NR main link, the UE measures the neighboring cell with the first priority and the serving cell by using the reference signal of the NR main link, to obtain the current measurement results of the NR main link in the neighboring cell with the first priority and the serving cell. The first priority is higher than the priority of the serving cell. The first priority complies with the first frequency priority configuration.

The UE determines, based on the current measurement results of the NR main link in the neighboring cell with the first priority and the serving cell, and the cell reselection condition, whether to perform cell reselection. A specific cell to be reselected is determined when it is determined to perform cell reselection.
② When the UE is located at the point O2, the UE works on the WUR link on the whole, but in some time periods, switches to the NR main link for RRM measurement, to switch between the WUR link and the NR main link.

When the UE works on the WUR link, the UE measures the serving cell by using the reference signal of the WUR link, to obtain the current measurement result of the WUR link in the serving cell.

When the UE works on the NR main link, the UE measures the serving cell and the neighboring cell by using the reference signal of the NR main link, to obtain the current measurement results of the NR main link in the serving cell and the neighboring cell. The neighboring cell herein includes the neighboring cell with the first priority and a neighboring cell whose frequency priority is equal to or lower than the frequency priority of the serving cell. To be specific, the neighboring cell herein includes all neighboring cells.

The UE determines, based on the current measurement results of the NR main link in the serving cell and the neighboring cell, and the cell reselection condition, whether to perform cell reselection. A specific cell to be reselected is determined when it is determined to perform cell reselection.
③ When the UE is located at the point O3, the UE cannot find the WUR signal, works only on the NR main link, and measures the serving cell and the neighboring cell by using the reference signal of the NR main link, to obtain the current measurement results of the NR main link in the serving cell and the neighboring cell. The UE determines, based on the current measurement results of the NR main link in the serving cell and the neighboring cell, and the cell reselection condition, whether to perform cell reselection; and when determining to perform cell reselection, determines the specific cell to be reselected.

Optionally, the UE can further learn the NR S criterion threshold, and the first threshold may be the NR S criterion threshold.

Optionally, the first threshold is a threshold other than the NR S criterion threshold.

Optionally, in Implementation 4, a relaxed measurement requirement may be combined.

A specific combination manner may be as follows:
The measurement gap on the NR main link is set to I when the relaxed measurement requirement is not used.
(1) When the current measurement result of the WUR link in the serving cell is greater than or equal to the first threshold, after the link on which the UE works is switched to the NR main link, the relaxed measurement requirement may be used when the neighboring cell with the first priority and/or the serving cell are/is measured. In this case, the measurement gap on the NR main link is K1*I. K1 is a positive number greater than 1.

For example, when the neighboring cell with the first priority is measured, the relaxed measurement requirement is used. In this case, the measurement gap on the NR main link is K1*I. When the serving cell is measured, the relaxed measurement requirement is not used.

When the current measurement result of the WUR link in the serving cell is less than the first threshold, after the link on which the UE works is switched to the NR main link, the relaxed measurement requirement may be used when the neighboring cell with the first priority and/or the serving cell are/is measured. In this case, the measurement gap on the NR main link is K2*I. K2 is a positive number greater than 1.

K1 may be greater than, less than, or equal to K2. Preferably, K1 is less than or equal to K2.

Optionally, at least one of K1 and K2 is an integer. Preferably, both K1 and K2 are integers.

(2) When the current measurement result of the WUR link in the serving cell is greater than or equal to the first threshold, after the link on which the UE works is switched to the NR main link, the first relaxed measurement requirement may be used when the serving cell is measured. In this case, the measurement gap on the NR main link is K1*I. K1 is a positive number greater than 1.

When the current measurement result of the WUR link in the serving cell is less than the first threshold, after the link on which the UE works is switched to the NR main link, the third relaxed measurement requirement may be used when the serving cell is measured, and in this case, the measurement gap on the NR main link is K3*I. The fourth relaxed measurement requirement is used when the neighboring cell is measured, and in this case, the measurement gap on the NR main link is K4*I. Both K3 and K4 are positive numbers greater than 1.

One of any two of K1, K2, K3, and K4 may be greater than, less than, or equal to the other one.

Optionally, K1 is less than or equal to K2. Optionally, K3 is less than or equal to K4. Optionally, K1 is greater than or equal to K3. Optionally, K2 is greater than or equal to K4.

Optionally, at least one of K1, K2, K3, or K4 is an integer. Preferably, K1, K2, K3, and K4 are all integers.

Optionally, the relaxed measurement requirement may be used together with a moving speed of the UE.

For a case in which the moving speed of the UE is in a low-speed state or is not in the low-speed state, refer to related content in Implementation 1 in Embodiment 1, and details are not described herein again. The following uses two implementations: Implementation 1 and Implementation 2 as examples for description.

### Implementation 1

For example, when the moving speed of the UE is in the low-speed state and after the link on which the UE works is switched to the NR main link, the neighboring cell with the first priority and/or the serving cell may be measured by using the relaxed measurement requirement. When the moving speed of the UE is not in the low-speed state and after the link on which the UE works is switched to the NR main link, the relaxed measurement requirement is not used to measure the neighboring cell with the first priority and/or the serving cell. Optionally, measurement first duration or second duration based on which whether the moving speed of the UE is in the low-speed state is determined overlaps or is adjacent to a time point at which the link on which the UE works is switched to the NR main link.

For example, when the moving speed of the UE is in the low-speed state and the current measurement result of the NR main link in the serving cell is greater than or equal to the NR S criterion threshold, and after the link on which the UE works is switched to the NR main link, the neighboring cell with the first priority and/or the serving cell may be measured by using the first relaxed measurement requirement.

When the moving speed of the UE is not in the low-speed state and the current measurement result of the NR main link in the serving cell is less than the NR S criterion threshold, and after the link on which the UE works is switched to the NR main link, the neighboring cell with the first priority and/or the serving cell may be measured by using the second relaxed measurement requirement.

For example, when the moving speed of the UE is in the low-speed state and the current measurement result of the WUR link in the serving cell is greater than or equal to the first threshold, and after the link on which the UE works is switched to the NR main link, the neighboring cell with the first priority and/or the serving cell may be measured by using the first relaxed measurement requirement.

When the moving speed of the UE is not in the low-speed state and the current measurement result of the WUR link in the serving cell is less than the first threshold, and after the link on which the UE works is switched to the NR main link, the neighboring cell with the first priority and/or the serving cell may be measured by using the second relaxed measurement requirement.

The measurement gap corresponding to the first relaxed measurement requirement is K1*I, and the measurement gap corresponding to the second relaxed measurement requirement is K2*I. Both K1 and K2 are positive numbers greater than 1. Preferably, K2 is greater than K1.

Optionally, at least one of K1 and K2 is an integer. Preferably, both K1 and K2 are integers.

### Implementation 2

For example, when the moving speed of the UE is in the low-speed state and the current measurement result of the NR main link in the serving cell is greater than or equal to the NR S criterion threshold, and after the link on which the UE works is switched to the NR main link, the neighboring cell with the first priority may be measured by using the first relaxed measurement requirement.

For example, when the moving speed of the UE is in the low-speed state and the current measurement result of the NR main link in the serving cell is greater than or equal to the NR S criterion threshold, and after the link on which the UE works is switched to the NR main link, the serving cell may be measured by using the second relaxed measurement requirement.

For example, when the moving speed of the UE is in the low-speed state and the current measurement result of the NR main link in the serving cell is less than the NR S criterion threshold, and after the link on which the UE works is switched to the NR main link, the serving cell may be measured by using the third relaxed measurement requirement.

For example, when the moving speed of the UE is in the low-speed state and the current measurement result of the NR main link in the serving cell is less than the NR S criterion threshold, and after the link on which the UE works is switched to the NR main link, the neighboring cell may be measured by using the fourth relaxed measurement requirement. The neighboring cell herein includes the neighboring cell with the first priority and a neighboring cell whose frequency priority is equal to or lower than the frequency priority of the serving cell.

For example, when the moving speed of the UE is in the low-speed state and the current measurement result of the WUR link in the serving cell is greater than or equal to the first threshold, and after the link on which the UE works is switched to the NR main link, the neighboring cell with the first priority may be measured by using the second relaxed measurement requirement.

For example, when the moving speed of the UE is in the low-speed state and the current measurement result of the WUR link in the serving cell is greater than or equal to the first threshold, and the link on which the UE works is switched to the NR main link, the serving cell may be measured by using the first relaxed measurement requirement.

For example, when the moving speed of the UE is in the low-speed state and the current measurement result of the WUR link in the serving cell is less than the first threshold, and after the link on which the UE works is switched to the NR main link, the serving cell may be measured by using the third relaxed measurement requirement.

For example, when the moving speed of the UE is in the low-speed state and the current measurement result of the WUR link in the serving cell is less than the first threshold, and after the link on which the UE works is switched to the NR main link, the neighboring cell may be measured by using the fourth relaxed measurement requirement. The neighboring cell herein includes the neighboring cell with the first priority and a neighboring cell whose frequency priority is equal to or lower than the frequency priority of the serving cell.

The measurement gap corresponding to the first relaxed measurement requirement is K1*I, the measurement gap corresponding to the second relaxed measurement requirement is K2*I, the measurement gap corresponding to the third relaxed measurement requirement is K3*I, and the measurement gap corresponding to the fourth relaxed measurement requirement is K4*I. K1, K2, K3, and K4 are all positive numbers greater than 1. One of any two of K1, K2, K3, and K4 may be greater than, less than, or equal to the other one.

Optionally, K2 is less than or equal to K1. Optionally, K3 is less than or equal to K4. Optionally, K1 is greater than or equal to K3. Optionally, K2 is greater than or equal to K4.

Implementation 3 may be further combined with Implementation 1 or Implementation 2, and a technical solution obtained through combination also falls within the scope of Implementation 3. Implementation 4 may be further combined with Implementation 1 or Implementation 2, and a technical solution obtained through combination also falls within the scope of Implementation 4.

Alternatively, the first threshold in Implementation 4 in Embodiment 2 may be replaced with the NR S criterion threshold. For a manner of obtaining the NR S criterion threshold by the UE, refer to the foregoing manner of obtaining the NR S criterion threshold. Details are not described herein again.

Other content in Implementation 4 in Embodiment 2 is the same as corresponding content in Implementation 1 in Embodiment 1, and details are not described herein again. The content in Implementation 1 in Embodiment 1 may be directly cited. To be specific, when no special description is provided or when there is no content contradictory with the foregoing content of Implementation 4 in Embodiment 2, the content of Implementation 1 in Embodiment 1 also belongs to the content of Implementation 4 in Embodiment 2 and is entirely cited into Implementation 4 in Embodiment 2.

The first frequency priority configuration is configuration of a frequency priority level for the UE. The priority level may be a cell reselection priority (cellReselectionPriority), for example, a level in a range of 0 to 7. For example, a priority level of a WUR frequency 1 is 1, and a priority level of a WUR frequency 2 is 5.

Optionally, a first priority level of the WUR frequency may be broadcast by using a system message. When the first priority level of the WUR frequency is configured, it is specified that the UE having the WUR capability or the UE having the energy saving preference/interest (preference/interest) uses the first priority configuration of the WUR frequency; or if the first priority level of the WUR frequency is not configured, other UE uses the second frequency priority configuration indicated by the NR main link.

Technical effects of Implementation 4 include technical effects of Implementation 1 and Implementation 2, and details are not described herein again.

Unless otherwise particularly specified or mutually exclusive, all or any part (including all or any part of different implementations) of the foregoing embodiments provided in this application may be freely combined, and technical solutions obtained through combination also fall within the scope of this application.

The method provided in embodiments of this application is applicable to the following user equipment UE. For example, FIG. 6 shows user equipment 600 according to this application. For example, the user equipment 600 includes at least one processor 610 and a memory 620. The processor 610 is coupled to the memory 620. Coupling in this embodiment of this application may be a communication connection, an electrical connection, or another form. Specifically, the memory 620 is configured to store program instructions. The processor 610 is configured to invoke the program instructions stored in the memory 620, so that the user equipment 600 performs the steps performed by the user equipment in the method provided in embodiments of this application. It should be understood that the user equipment 600 may be configured to implement the method provided in embodiments of this application. For related features, refer to the foregoing descriptions. Details are not described herein again. The user equipment 600 may be at least one of the foregoing network device and terminal device.

Optionally, the user equipment 600 may not include the memory 620, that is, the user equipment 600 is not provided with the memory 620, the program instructions are stored on another device or a cloud, and before the user equipment 600 runs the program instructions, the program instructions are received from the another device or the cloud.

An embodiment of this application further provides a chip. The chip may include an input interface, an output interface, and a processing circuit. In this embodiment of this application, the input interface and the output interface may complete signaling or data interaction, and the processing circuit may complete generation and processing of the signaling or data information.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete component.

An embodiment of this application further provides a processor, configured to be coupled to a memory. The memory stores instructions. When the processor runs the instructions, the processor is enabled to perform the method and function in any one of the foregoing embodiments.

An embodiment of this application further provides a computer program product including instructions. When the computer program product is run on a computer, the computer is enabled to perform the method and function in any one of the foregoing embodiments.

An embodiment of this application further provides a computer-readable storage medium, storing computer instructions. When a processor runs the instructions, the processor is enabled to perform the method and function in any one of the foregoing embodiments.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although aspects of embodiments of this application are shown and described as block diagrams or flowcharts, or represented by some other illustrations, it should be understood that the blocks, apparatuses, systems, technologies, or methods described in this specification may be implemented as, for example, non-limiting examples, hardware, software, firmware, dedicated circuits or logic, general-purpose hardware, controllers, other computing devices, or a combination thereof.

This application further provides at least one computer program product tangibly stored on a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code for implementing the method in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of this application, the computer program code or related data may be included in any proper carrier, so that the device, the apparatus, or the processor can perform various processing and operations described above. For example, the carrier includes a signal, a computer-readable medium, and the like. For example, the signal may include an electrical signal, an optical signal, a radio signal, a voice signal, or other forms of propagated signals, such as a carrier signal and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the method in this application are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that features and functions of two or more apparatuses according to this application may be specific in one apparatus. Instead, features and functions of one apparatus described above may be further specific in a plurality of apparatuses.

In embodiments of this application, as used in the specification and the appended claims of this application, singular expressions "a", "the", "the above", and "this" also aim to include expressions such as "one or more", unless the context explicitly indicates the opposite. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment" or "some embodiments" described in this specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. The terms "first" and "second" are used only for descriptive purposes, and cannot be understood as indicating or implying relative importance or implicitly indicating a quantity of indicated technical features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the term "example", "for example", or the like is intended to present a related concept in a specific manner.

The foregoing has described the implementations of this application. The foregoing descriptions are examples, are not exhaustive, and are not limited to the disclosed implementations. Many modifications and changes are apparent to a person of ordinary skill in the art without departing from the scope of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A measurement method, applied to a terminal device, wherein the method comprises:
when the terminal device receives a wake up signal over a wake up radio WUR link and a first condition is met, measuring, by the terminal device, a serving cell and a neighboring cell over a new radio NR main link, to obtain first measurement results of the NR main link in the serving cell and the neighboring cell; and
determining, based on the first measurement results and a cell reselection condition, whether to perform cell reselection, wherein
the first condition comprises that a result of measuring the serving cell by the terminal device on the NR main link or the WUR link is less than a first value.

2. The method according to claim 1, wherein the measuring a serving cell and a neighboring cell over a NR main link comprises:
switching, between the NR main link and the WUR link, a link on which the terminal device works; and the switching comprises:
when the terminal device works on the NR main link, measuring, by the terminal device, the serving cell and the neighboring cell by using a reference signal of the NR main link.

3. The method according to claim 1 or 2, wherein
in the case that the first condition comprises that the result of measuring the serving cell by the terminal device on the NR main link is less than the first value, the first condition further comprises that the result of measuring the serving cell by the terminal device on the WUR link is less than a first threshold.

4. The method according to claim 3, wherein the method comprises:
when the result of measuring the serving cell on the NR main link is greater than or equal to the first value, and the result of measuring the serving cell on the WUR link is less than the first threshold, switching, between the NR main link and the WUR link, the link on which the terminal device works; and the switching comprises:
when the terminal device works on the NR main link, measuring, by the terminal device, the serving cell by using the reference signal of the NR main link, to obtain the measurement result of the NR main link in the serving cell.

5. The method according to claim 3, wherein the method comprises:
when the measurement result of the WUR link in the serving cell is greater than or equal to the first threshold, working, by the terminal device, only on the WUR link, and measuring the serving cell by using a reference signal of the WUR link, to obtain the measurement result of the WUR link in the serving cell.

6. The method according to any one of claims 3 to 5, wherein the first value is a NR S criterion threshold.

7. The method according to claim 1 or 2, wherein in the case that the first condition comprises that the result of measuring the serving cell by the terminal device on the WUR link is less than the first value, the method comprises:
when the measurement result of the WUR link in the serving cell is greater than or equal to the first value, working, by the terminal device, only on the WUR link, and measuring the serving cell by using a reference signal of the WUR link, to obtain the measurement result of the WUR link in the serving cell.

8. The method according to claim 7, wherein the first value is a first threshold.

9. The method according to claim 1 or 2, wherein in the case that the first condition comprises that the result of measuring the serving cell by the terminal device on the NR main link is less than the first value, the method comprises:
when the result of measuring the serving cell by the terminal device on the NR main link is greater than or equal to the first value, switching, between the NR main link and the WUR link, the link on which the terminal device works; and the switching comprises:
when the terminal device works on the NR main link, measuring, by the terminal device, a neighboring cell with a first priority and the serving cell by using the reference signal of the NR main link, to obtain second measurement results of the NR main link in the neighboring cell with the first priority and the serving cell, wherein the first priority is higher than a priority of a frequency of the serving cell of the terminal device; and
determining, based on the second measurement results and the cell reselection condition, whether to perform cell reselection.

10. The method according to claim 1 or 2, wherein in the case that the first condition comprises that the result of measuring the serving cell by the terminal device on the WUR link is less than the first value, the method comprises:
when the result of measuring the serving cell by the terminal device on the WUR link is greater than or equal to the first value, switching, between the NR main link and the WUR link, the link on which the terminal device works; and the switching comprises:
when the terminal device works on the NR main link, measuring, by the terminal device, a neighboring cell with a first priority and the serving cell by using the reference signal of the NR main link, to obtain second measurement results of the NR main link in the neighboring cell with the first priority and the serving cell, wherein the first priority is higher than a priority of a frequency of the serving cell of the terminal device; and
determining, based on the second measurement results and the cell reselection condition, whether to perform cell reselection.

11. The method according to claim 9, wherein the method comprises:
when the result of measuring the serving cell by the terminal device on the NR main link is greater than or equal to the first value, and the measurement result of the WUR link in the serving cell is less than a first threshold, switching, between the NR main link and the WUR link, the link on which the terminal device works; and the switching comprises:
when the terminal device works on the NR main link, measuring, by the terminal device, the neighboring cell with the first priority and the serving cell by using the reference signal of the NR main link, to obtain the second measurement results of the NR main link in the neighboring cell with the first priority and the serving cell, wherein the first priority is higher than the priority of the frequency of the serving cell of the terminal device; and
determining, based on the second measurement results and the cell reselection condition, whether to perform cell reselection.

12. The method according to any one of claims 2, 4, and 9 to 11, wherein the switching, between the NR main link and the WUR link, a link on which the terminal device works further comprises:
when the terminal device works on the WUR link, measuring, by the terminal device, the serving cell by using a reference signal of the WUR link, to obtain the measurement result of the WUR link in the serving cell.

13. The method according to claim 11, wherein the method comprises:
when the measurement result of the WUR link in the serving cell is greater than or equal to the first threshold, working, by the terminal device, only on the WUR link, and measuring the serving cell by using a reference signal of the WUR link, to obtain the measurement result of the WUR link in the serving cell.

14. The method according to any one of claims 9 and 11 to 13, wherein the first value is an NR S criterion threshold.

15. The method according to claim 10, wherein the first value is a first threshold.

16. The method according to any one of claims 9 to 15, wherein the neighboring cell with the first priority corresponds to a frequency with the first priority; and
the priority of the frequency of the serving cell and the first priority are comprised in a first priority configuration, and the first priority configuration is a priority configuration used when the terminal device receives the WUR signal over the WUR link.

17. The method according to any one of claims 1 to 16, wherein the determining, based on the first measurement results and a cell reselection condition, whether to perform cell reselection comprises:
performing cell reselection when a first current measurement results meet the cell reselection condition.

18. The method according to any one of claims 1 to 17, wherein the determining, based on the first measurement results and a cell reselection condition, whether to perform cell reselection comprises:
skipping performing cell reselection when the first current measurement results do not meet the cell reselection condition.

19. The method according to any one of claims 9 to 11 and 13 to 15, wherein the determining, based on the second measurement results and the cell reselection condition, whether to perform cell reselection comprises:
performing cell reselection when a second current measurement results meet the cell reselection condition.

20. The method according to any one of claims 9 to 11 and 13 to 15, wherein the determining, based on the second measurement results and the cell reselection condition, whether to perform cell reselection comprises:
skipping performing cell reselection when a second current measurement results do not meet the cell reselection condition.

21. The method according to any one of claims 1 to 20, wherein the performing cell reselection comprises:
selecting a first neighboring cell as an updated serving cell, wherein the first neighboring cell is one of neighboring cells.

22. The method according to any one of claims 1 to 21, wherein the terminal device measures the serving cell over the NR main link, and uses a first relaxed measurement requirement.

23. The method according to any one of claims 1 to 21, wherein the terminal device measures the neighboring cell over the NR main link, and uses a second relaxed measurement requirement.

24. The method according to any one of claims 9 to 21, wherein the terminal device measures the neighboring cell with the first priority over the NR main link, and uses a second relaxed measurement requirement.

25. The method according to claim 9 or 10, wherein when the first condition is not met and the terminal device works on the NR main link, the terminal device measures the serving cell by using the reference signal of the NR main link, and uses a third relaxed measurement requirement.

26. The method according to claim 9 or 10, wherein when the first condition is not met and the terminal device works on the NR main link, the terminal device measures the neighboring cell by using the reference signal of the NR main link, and uses a fourth relaxed measurement requirement.

27. The method according to claim 22, wherein when the terminal device is in a low-speed state, the terminal device measures the serving cell by using the reference signal of the NR main link, and uses the first relaxed measurement requirement.

28. The method according to claim 23, wherein when the terminal device is in a low-speed state, the terminal device measures the neighboring cell by using the reference signal of the NR main link, and uses the second relaxed measurement requirement.

29. The method according to claim 24, wherein when the terminal device is in a low-speed state, the terminal device measures the neighboring cell with the first priority by using the reference signal of the NR main link, and uses the second relaxed measurement requirement.

30. The method according to claim 25, wherein when the terminal device is in a low-speed state, the first condition is not met, and the terminal device works on the NR main link, the terminal device measures the serving cell by using the reference signal of the NR main link, and uses the third relaxed measurement requirement.

31. The method according to claim 26, wherein when the terminal device is in a low-speed state, the first condition is not met, and the terminal device works on the NR main link, the terminal device measures the neighboring cell by using the reference signal of the NR main link, and uses the fourth relaxed measurement requirement.

32. The method according to any one of claims 1 to 31, wherein the serving cell is a cell on which the terminal device currently camps.

33. A terminal device, wherein the terminal device comprises a processor and a memory, the memory stores a computer program, and when the computer program is run by the processor, the terminal device is enabled to perform the method according to any one of claims 1 to 32.

34. A computer-readable storage medium, storing a computer program, wherein when the computer program is run on a terminal device, the terminal device is enabled to perform the method according to any one of claims 1 to 32.

35. A computer program product, stored in a computer-readable storage medium, wherein when the computer program product is run on a terminal device, the terminal device is enabled to perform the method according to any one of claims 1 to 32.

36. A chip, comprising a processor and a memory coupled to the processor, wherein the memory stores a computer program, the chip is located in a terminal device, and when the processor executes the computer program, the terminal device is enabled to perform the method according to any one of claims 1 to 32.

37. A communication system, wherein the communication system comprises a terminal device and a network device, and the terminal device is configured to perform the method according to any one of claims 1 to 32.
